# EUROPÄISCHE PATENTANMELDUNG

(11) **EP 3 546 114 A1**
(43) Veröffentlichungstag der Anmeldung: **02.10.2019**
(21) Anmeldenummer: 18164101.0
(22) Anmeldetag: 26.03.2018
(51) Int. Cl.: B23K 37/04, B23K 10/00, B23K 26/38

(54) **VERFAHREN ZUM AUSSCHNEIDEN VON WERKSTÜCKTEILEN**

(71) Anmelder: Hans Schröder Maschinenbau GmbH, 82405 Wessobrunn-Forst (DE)
(72) Erfinder: SCHRÖDER, Sebastian, 80335 München (DE)
(74) Vertreter: Gebauer, Dieter Edmund

(57) **Zusammenfassung**

Die Erfindung betrifft ein Verfahren zum Ausschneiden von Werkstückteilen (5) aus einem plattenförmigen Werkstück (4) mittels eines innerhalb eines Schneidspalts (9) geführten Schneidstrahls, welches die folgenden Schritte umfasst:
- Bereitstellen des plattenförmigen Werkstücks (4) auf einer aus mehreren Auflageflächen (8) zusammengesetzten Werkstückauflage (3),
- Ausschneiden mindestens eines Werkstückteils (5) aus dem plattenförmigen Werkstück (4), wobei ein Restgitter (6) verbleibt,
- Entfernen des ausgeschnittenen Werkstückteils (5) vom Restgitter (6) durch Absenken mindestens einer höhenverstellbaren Auflagefläche (8) von einer Hochposition, in der die Auflagefläche Teil der Werkstückauflage ist, in mindestens eine Tiefposition,
- Entfernen des ausgeschnittenen Werkstückteils (5) von der in Tiefposition befindlichen höhenverstellbaren Auflagefläche (8),
- Hochstellen der höhenverstellbaren Auflagefläche (8) von der Tiefposition in die Hochposition.

## Beschreibung

Die Erfindung liegt auf dem technischen Gebiet der trennenden Bearbeitung von Werkstücken und betrifft ein Verfahren zum Ausschneiden von Werkstückteilen aus einem plattenförmigen Werkstück mittels eines Schneidstrahls.

Im Handel verfügbare Laserschneidmaschinen ermöglichen eine automatisierte Fertigung von Metallteilen mit hoher Produktionsrate und guter Präzision. Hierbei wird ein Laserstrahl mit hinreichender Energie zur Metalltrennung auf eine Metalltafel gerichtet und entlang der Schneidkonturen auszuschneidender Metallteile geführt. Eine Ansteuerung der Schneidstellen erfolgt durch einen über der Metalltafel verfahrbaren Schneidkopf, an dessen endständiger Düse der Laserstrahl austritt.

In der Praxis können vielfältige Probleme auftreten, welche Effizienz und Kosten bei der automatisierten Fertigung von Metallteilen nachteilig beeinträchtigen. Beispielsweise kann ein ausgeschnittenes Metallteil gegenüber dem verbliebenen Werkstück ("Restgitter") verkippen, was insbesondere bei den häufig eingesetzten Werkstückauflagen mit Tragspitzen der Fall ist. Verkippt ein Metallteil, ist eine Kollision mit dem weiter im Schneidprozeß eingesetzten Schneidkopf möglich. Hierdurch wird der Schneidprozeß unterbrochen und im schlimmsten Fall wird der Schneidkopf beschädigt. Vermieden wird dies beispielsweise durch eine so geringe Packungsdichte der Metallteile, dass der Schneidkopf beim Ausschneiden eines Metallteils stets hinreichend weit von einem möglicher Weise verkippten benachbarten Metallteil entfernt ist. Nachteilig bei dieser Vorgehensweise sind die relativ schlechte Materialausnutzung und die damit einhergehenden höheren Produktionskosten. Hinzu kommt, dass es oftmals nicht möglich ist, den Abstand zwischen Metallteilen hinreichend groß zu wählen, beispielsweise wenn innerhalb eines Metallteils ein oder mehrere andere Metallteile auszuschneiden sind. Bekannt ist auch das unvollständige Freischneiden von Metallteilen, wobei schmale Verbindungsstege zum Restgitter verbleiben ("Microjoints"), welche die Metallteile weiterhin fixieren und damit auch ein Verkippen verhindern. Die Microjoints werden erst nach Abarbeiten aller Metallteile aufgetrennt und die Metallteile vom Restgitter gelöst. Nachteilig sind der zusätzliche Bearbeitungsschritt und eine oftmals erforderliche zusätzliche Nachbearbeitung der Schnittkanten durch Unebenheiten im Bereich der aufgetrennten Microjoints. Zudem kann die Verwendung von Microjoints bei Metallteilen mit kleinen Toleranzen nicht praktikabel sein.

Für eine effiziente Teilefertigung mit hoher Produktionsrate ist es wichtig, freigeschnittene Metallteile schnell und effizient vom Restgitter zu entfernen. Neben dem manuellen Entfernen der Metallteile kommen automatisierte Handhabungseinrichtungen in Form von roboterbasierten Greifarmen zur Anwendung. Typischer Weise werden die Metallteile jedoch erst am Ende des kompletten Schneidprozesses, d.h. nach Freischneiden aller Metallteile, vom Restgitter entnommen, was nachteilig im Hinblick auf die oben beschriebene Kipp-Problematik bereits freigeschnittener Metallteile ist und die Wahrscheinlichkeit einer Kollision mit dem Schneidkopf erhöht.

Demgegenüber besteht die Aufgabe der vorliegenden Erfindung darin, herkömmliche Verfahren zum Ausschneiden von Werkstückteilen aus plattenförmigen Werkstücken mittels eines Schneidstrahls in vorteilhafter Weise so weiterzubilden, dass eine Fertigung von Werkstückteilen mit einer besonders hohen Prozeßsicherheit und Effizienz sowie relativ geringen Fertigungskosten ermöglicht ist.

Diese und weitere Aufgaben werden nach dem Vorschlag der Erfindung durch ein Verfahren zum Ausschneiden von Werkstückteilen aus einem plattenförmigen Werkstück mit den Merkmalen des unabhängigen Patentanspruchs gelöst. Vorteilhafte Ausgestaltungen der Erfindung sind durch die Merkmale der Unteransprüche angegeben.

Erfindungsgemäß ist ein Verfahren zum Ausschneiden von Werkstückteilen aus einem plattenförmigen Werkstück mittels eines auf das Werkstück gerichteten Schneidstrahls gezeigt. Vorzugsweise, jedoch nicht zwingend, kann das erfindungsgemäße Verfahren in einer Laserschneidmaschine ausgeführt werden, bei der Werkstückteile mittels eines Laserstrahls aus dem plattenförmigen Werkstück geschnitten werden. Grundsätzlich kann für das erfindungsgemäße Verfahren jede Technologie eingesetzt werden, bei welcher ein Schneidstrahl zur trennenden Bearbeitung eines Werkstücks eingesetzt wird. Neben Laserschneiden eignen sich hierfür beispielsweise Plasmaschneiden und Wasserstrahlschneiden. In dem erfindungsgemäßen Verfahren wird ein Schneidstrahl entlang jeweiliger Schneidkonturen der Werkstückteile geführt. Grundsätzlich können die von einem selben Werkstück auszuschneidenden Werkstückteile unterschiedliche Formen und voneinander verschiedene Größen haben. Möglich ist jedoch auch, dass mehrere oder alle Werkstückteile eine gleiche Form und Größe haben. Der Schneidstrahl wird innerhalb eines länglichen Schneidspalts geführt, der von einer aus mehreren (separaten) Auflageflächen zusammengesetzten Werkstückauflage begrenzt wird. Die Auflageflächen sind in einer Reihe nacheinander angeordnet. Typischer Weise sind unmittelbar benachbarte Auflageflächen durch einen Zwischenraum voneinander getrennt. Der Schneidspalt weist entlang seiner Erstrekkung eine längere Abmessung und senkrecht hierzu eine kürzere Abmessung auf. Die kürzere Abmessung (in Richtung der reihenförmigen Anordnung der Auflageflächen) wird hier und im Weiteren als "Schneidspaltbreite" bezeichnet.

Das erfindungsgemäße Verfahren umfasst in allgemeiner Form die folgenden Schritte:
- Bereitstellen eines plattenförmigen Werkstücks auf der Werkstückauflage,
- Ausschneiden mindestens eines Werkstückteils aus dem plattenförmigen Werkstück, wobei ein Restgitter verbleibt,
- Entfernen des ausgeschnittenen Werkstückteils vom Restgitter durch Absenken mindestens einer höhenverstellbaren Auflagefläche von einer Hochposition, in der die Auflagefläche Teil der Werkstückauflage ist, in mindestens eine Tiefposition,
- Entfernen des ausgeschnittenen Werkstückteils von der in Tiefposition befindlichen Auflagefläche,
- Hoch- bzw. Rückstellen der Auflagefläche von der Tiefposition in die Hochposition.

Erfindungsgemäß wird ein ausgeschnittenes Werkstückteil durch Absenken auf einer zunächst als Teil der Werkstückauflage dienenden, höhenverstellbaren Auflagefläche vom Restgitter entfernt, wodurch das Werkstückteil einfach, zuverlässig und schnell zeitnah nach dem Freischneiden ausgeschleust werden kann. Sobald das Werkstückteil abgesenkt wird, ist eine Kollision mit dem Schneidkopf nicht mehr möglich. Während die höhenverstellbare Auflagefläche abgesenkt ist, bilden die übrigen Auflageflächen, die beiderseits des Schneidspalts angeordnet sind, weiterhin eine Werkstückauflage für das plattenförmige Werkstück bzw. Restgitter, so dass der Schneidprozeß fortgeführt werden kann. In besonders vorteilhafter Weise wird, während sich die mindestens eine höhenverstellbare Auflagefläche unterhalb der Hochposition befindet, ein Schneidvorgang zum Ausschneiden mindestens eines weiteren Werkstückteils durch- bzw. fortgeführt. Hierdurch können Werkstückteile mit einer besonders hohen Effizienz hergestellt werden.

Das durch Absenken der höhenverstellbaren Auflagefläche vom Restgitter entfernte Werkstückteil kann grundsätzlich jede beliebige Größe haben, die ein Absenken auf der mindestens einen höhenverstellbaren Auflagefläche ermöglicht. Vorzugsweise werden nur solche Werkstückteile durch Absenken auf mindestens einer höhenverstellbaren Auflagefläche vom Restgitter entfernt, die in Richtung der Spaltbreite des Schneidspalts (d.h. in Richtung der reihenförmigen Anordnung der Auflageflächen) eine Abmessung aufweisen, die gleich oder größer ist als die Spaltbreite, also nicht durch den Schneidspalt ausgeschleust werden können. In Verbindung mit dem nachfolgend beschriebenen Ausschleusen kleiner Werkstückteile durch den Schneidspalt kann eine sehr effiziente Teilefertigung erreicht werden.

Vorteilhaft ist die mindestens eine höhenverstellbare Auflagefläche in Tiefposition kippbar ausgebildet, wobei das auf der Auflagefläche befindliche Werkstückteil durch Kippen der Auflagefläche von der Auflagefläche abrutscht und beispielsweise in einen Gutteilbehälter gelangt. Vorteilhaft wird das Werkstückteil von der in Tiefposition befindlichen Auflagefläche an eine (Werkstückteil-)Abtransporteinrichtung zum Abtransportieren des Werkstückteils übergeben und abtransportiert. Das Werkstückteil kann beispielsweise durch Kippen der höhenverstellbaren Auflagefläche in Tiefposition, d.h. Abrutschen des Werkstückteils, an die Werkstückteil-Abtransporteinrichtung übergeben werden. Möglich ist aber auch ein aktiv angetriebener Transport des Werkstückteils (z.B. Bandtransport) von der höhenverstellbaren Auflagefläche zur Werkstückteil-Abtransporteinrichtung. Das schnelle Freimachen der höhenverstellbaren Auflagefläche ermöglicht ein zügiges Rückstellen in die Ebene der Werkstückauflage, um weitere Werkstückteile durch Absenken der Auflagefläche vom Restgitter zu entfernen, wodurch die Effizienz bei der Teilefertigung weiter verbessert wird. Vorzugsweise wird das Werkstückteil durch die Werkstückteil-Abtransporteinrichtung in eine Position transportiert, bei der sich das Werkstückteil außerhalb eines Raums befindet, der sich in Schwerkraftrichtung (direkt) unterhalb der Werkstückauflage befindet. Durch diese Maßnahme wird erreicht, dass das Werkstückteil insbesondere von oben her gut zugänglich ist und in einfacher Weise von der Werkstückteil-Abtransporteinrichtung entfernt werden kann, beispielsweise durch eine Handhabungseinrichtung, wie ein Saugheber.

Vorzugsweise wird die mindestens eine höhenverstellbare Auflagefläche zwischen der Hochposition und der mindestens einen Tiefposition verstellt, indem die Höhe eines die Auflagefläche bildenden Auflagetisches verstellt wird. Dies ermöglicht eine besonders einfache Verstellung der Höhe der Auflagefläche. In diesem Fall ist es vorteilhaft, wenn die Auflagefläche relativ zu einer Basis des Auflagetisches positionsfest ist. Denkbar ist jedoch auch, dass ergänzend oder alternativ die Auflagefläche relativ zur Basis des Auflagetisches verstellt wird.

Gemäß einer vorteilhaften Ausgestaltung des erfindungsgemäßen Verfahrens wird mindestens ein Werkstückteil vom plattenförmigen Werkstück so ausgeschnitten, dass es beim Freischneiden durch den Schneidspalt fällt. Das Werkstückteil muss zu diesem Zweck eine geeignete Größe aufweisen, d.h. in Richtung der Spaltbreite eine Abmessung haben, die kleiner ist als die Spaltbreite. Auf diese Weise können kleine Werkstückteile in einfacher Weise schnell und zuverlässig durch den Schneidspalt ausgeschleust werden, wodurch die Effizienz bei der Teilefertigung verbessert wird. In entsprechender Weise ist es vorteilhaft, wenn mindestens ein Abfallteil so ausgeschnitten wird, dass es beim Freischneiden durch den Schneidspalt fällt, was gleichermaßen ein schnelles und zuverlässiges Ausschleusen von kleinen Abfallteilen ermöglicht.

Vorteilhaft kann es sein, wenn durch den Schneidspalt fallende kleine Werkstückteile und/oder kleine Abfallteile aus der Fall-Linie abgelenkt werden, insbesondere in einen entsprechenden Gutteil- oder Abfallteilbehälter hinein. Denkbar ist, dass verschiedene Werkstückteile und/oder Abfallteile, die durch den Schneidspalt fallen, in voneinander verschiedene Richtungen abgelenkt werden, insbesondere um Werkstückteile und/oder Abfallteile zu sortieren. Vorzugsweise gelangen durch den Schneidspalt fallende kleine Abfallteile (unmittelbar) auf eine Abfallteil-Abtransporteinrichtung und werden abtransportiert, beispielsweise zu einem Abfallteilbehälter.

Gemäß einer weiteren vorteilhaften Ausgestaltung des erfindungsgemäßen Verfahrens wird mindestens ein Werkstückteil vom Restgitter entfernt, indem das Werkstückteil mittels einer Handhabungseinrichtung, beispielsweise ein Saugheber, aufgenommen und vom Restgitter entfernt wird. Vorzugsweise werden ausschließlich solche Werkstückteile auf diese Art und Weise vom Restgitter entfernt, die, bemessen in Richtung der Spaltbreite des Schneidspalts (d.h. in Richtung der reihenförmigen Anordnung der Auflageflächen), jeweils eine Abmessung aufweisen, die gleich oder größer ist als die Summe einer Abmessung der mindestens einen höhenverstellbaren Auflagefläche und der Spaltbreite des Schneidspalts.
In dem erfindungsgemäßen Verfahren können die aufgezeigten Möglichkeiten zum Ausschleusen verschieden großer Werkstückteile beliebig kombiniert werden. So können kleine Werkstückteile (vorzugsweise ausschließlich) durch den Schneidspalt und/oder mittelgroße Werkstückteile (vorzugsweise ausschließlich) durch Absenken mindestens einer höhenverstellbaren Auflagefläche und/oder große Werkstückteile (vorzugsweise ausschließlich) durch eine Handhabungseinrichtung vom Restgitter entfernt werden. Neben einer erheblichen Verbesserung der Effizienz der Teilefertigung können durch das zügige Entfernen bereits ausgeschnittener kleiner und mittelgroßer Werkstückteile die eingangs geschilderten Probleme aufgrund des möglichen Verkippens von Werkstückteilen relativ zum Restgitter und die damit verbundene Gefahr einer Kollision mit dem Schneidkopf erheblich vermindert werden.

Im Hinblick auf eine Vermeidung der Kipp-Problematik bereits ausgeschnittener Werkstückteile ist es weiterhin vorteilhaft, wenn das plattenförmige Werkstück von den die Werkstückauflage bildenden Auflageflächen vollflächig unterstützt wird. In dieser Hinsicht kann es auch vorteilhaft sein, wenn mindestens ein ausgeschnittenes Werkstückteil und/oder das Restgitter auf mindestens einer Auflagefläche, insbesondere der kompletten Werkstückauflage, fixiert wird. Vorteilhaft wird ein auszuschleusendes Werkstückteil auf der höhenverstellbaren Auflagefläche fixiert, um eine stabile Lagerung während des Absenkens der Auflagefläche von der Hochposition in die mindestens eine Tiefposition zu gewährleisten.

Weitere Merkmale und Vorteile des erfindungsgemäßen Verfahrens ergeben sich aus der folgenden Beschreibung einer zur Durchführung des Verfahrens geeigneten Vorrichtung zum Ausschneiden von Werkstückteilen, wobei die Vorrichtung lediglich als beispielhaft zu verstehen ist und den allgemeinen Erfindungsgedanken nicht einschränken soll.

Die Vorrichtung zum Ausschneiden von Werkstückteilen umfasst mindestens drei ebene (separate) Auflageflächen, die in einer Reihe nacheinander angeordnet sind. Vorzugsweise werden die Auflageflächen jeweils von einem separaten Auflagetisch gebildet, wobei jeder Auflagetisch eine ebene Auflagefläche aufweist, die von der Auflagefläche eines anderen Auflagetisches verschieden ist. Auf den Auflageflächen können Gegenstände jeweils durch Eigengewicht zur Auflage gebracht werden. Zu diesem Zweck sind die ebenen Auflageflächen jeweils so angeordnet, dass eine Senkrechte zur Auflagefläche zumindest eine Richtungskomponente umfasst, die entgegen der Schwerkraft nach oben gerichtet ist. Vorteilhaft sind die ebenen Auflageflächen jeweils horizontal angeordnet, wobei die Senkrechten zu den Auflageflächen entgegen der Schwerkraft nach oben gerichtet sind. Die Vorrichtung ist so ausgebildet, dass zwischen zwei unmittelbar benachbarten Auflageflächen ein hinreichend großer Zwischenraum vorliegt, der als Schneidspalt für den Schneidstrahl dienen kann. Vorzugsweise sind zu diesem Zweck zwei unmittelbar benachbarte Auflagetische, welche die beiden Auflageflächen bilden, mit einem Zwischenabstand so angeordnet, dass ein Zwischenraum zwischen den zugehörigen Auflageflächen gebildet wird, der als Schneidspalt für den Schneidstrahl dient. Die Vorrichtung ist so ausgebildet, dass eine Bearbeitung des plattenförmigen Werkstücks mittels des Schneidstrahls nur im Bereich des Schneidspalts erfolgen kann.

In der Vorrichtung zum Ausschneiden von Werkstückteilen wird durch mindestens zwei Auflageflächen, die beidseitig (d.h. auf einander gegenüberliegenden Seiten) des Schneidspalts angeordnet sind, gemeinsam eine ebene Werkstückauflage für das plattenförmige Werkstück gebildet. Der Ausdruck "Werkstückauflage" bezieht sich auf zueinander fluchtend und somit in einer selben Ebene angeordnete Auflageflächen. Es versteht sich, dass die Werkstückauflage gleichermaßen durch drei oder gegebenenfalls mehr Auflageflächen gebildet werden kann. Die somit stets aus mindestens zwei Auflageflächen zusammengesetzte Werkstückauflage ist typischer Weise in einer horizontalen Ebene ausgebildet. Das plattenförmige Werkstück (bzw. das Restgitter nach Ausschneiden von mindestens einem Werkstückteil) kann auf der Werkstückauflage so angeordnet werden, dass ein frei wählbarer Abschnitt des Werkstücks über dem Schneidspalt positionierbar ist, um diesen Abschnitt einer trennenden Bearbeitung durch den Schneidstrahl zu unterziehen. So kann ein frei endender Randabschnitt des Werkstücks über dem Schneidspalt positioniert werden oder das Werkstück überspannt den Schneidspalt und liegt hierbei mindestens zwei Auflageflächen, die beidseitig des Schneidspalts angeordnet sind, gleichzeitig auf, so dass ein weiter innen liegender Abschnitt des Werkstücks durch den Schneidstrahl bearbeitet werden kann.

Wesentlich hierbei ist, dass mindestens eine Auflagefläche, welche dem Schneidspalt unmittelbar angrenzt und zwischen zwei anderen Auflageflächen angeordnet ist, eine höhenverstellbare Auflagefläche ist. Die Höhe der Auflagefläche ist verstellbar zwischen einer Hochposition, in der die Auflagefläche zur Werkstückauflage beiträgt und in der Ebene der Werkstückauflage angeordnet ist, und mindestens einer frei wählbaren Tiefposition, in der die Auflagefläche relativ zur Werkstückauflage (relativ zur Ebene der Auflageflächen, welche gemeinsam die Werkstückauflage bilden) abgesenkt ist. Vorzugsweise, jedoch nicht zwingend, ist ein die höhenverstellbare Auflagefläche bildender Auflagetisch zu diesem Zweck selbst höhenverstellbar, wobei durch eine Verstellung der Höhe des Auflagetisches gleichzeitig die Höhe seiner Auflagefläche zwischen der Hochposition und der mindestens einen Tiefposition verstellt wird. Bei einer Höhenverstellung des Auflagetisches bleibt eine relative Position der Auflagefläche zu einer die Auflagefläche tragenden Basis des Auflagetisches vorteilhaft unverändert. Möglich ist jedoch auch, dass alternativ oder ergänzend die Höhe der die Auflagefläche tragenden Basis des Auflagetisches unverändert bleibt und lediglich die Höhe der Auflagefläche verändert wird, um die Auflagefläche zwischen der Hochposition und der mindestens einen Tiefposition zu verstellen. In dem letztgenannten Fall verändert sich somit die relative Position zwischen der die Auflagefläche tragenden Basis des Auflagetisches und der Auflagefläche.

In vorliegender Erfindungsbeschreibung bezieht sich der Ausdruck "Höhe" auf eine Position einer Auflagefläche bzw. des die Auflagefläche bildenden Auflagetisches in Bezug auf die Richtung der Schwerkraft, wobei sich eine Tiefposition in Schwerkraftrichtung unterhalb einer Hochposition befindet und eine Hochposition entgegen Schwerkraftrichtung oberhalb einer Tiefposition befindet. Somit kann die höhenverstellbare Auflagefläche durch Absenken in Schwerkraftrichtung von der Hochposition in mindestens eine Tiefposition und durch Anheben entgegen der Schwerkraftrichtung von einer Tiefposition in die Hochposition gebracht werden. In allgemeiner Weise umfasst das Absenken mindestens eine Bewegungskomponente in Schwerkraftrichtung, das Anheben mindestens eine Bewegungskomponente entgegen Schwerkraftrichtung.

Für eine aktive Verstellung der Höhe der mindestens einen höhenverstellbaren Auflagefläche sind die Auflagefläche und/oder der Auflagetisch mit einem an sich bekannten Mechanismus zur Höhenverstellung gekoppelt, der in vielfältiger Weise ausgebildet sein kann. Lediglich beispielhaft sei angegeben, dass die Auflagefläche und/oder der Auflagetisch mit einem elektrisch oder pneumatisch verstellbaren Hubmittel gekoppelt sein kann. Alternativ können Auflagefläche und/oder Auflagetisch beispielsweise mit einem elektrischen Linearantrieb gekoppelt und entlang einer Linearführung verfahrbar sein. Die konkrete Ausgestaltung des Mechanismus zur Höhenverstellung ist für das Verständnis der Erfindung ohne Belang. Zudem sind dem Fachmann derartige Höhenverstellmechanismen geläufig, so dass hier nicht näher darauf eingegangen werden muss.

Mindestens eine höhenverstellbare Auflagefläche kann relativ zu den anderen Auflageflächen, welche gemeinsam weiterhin die Werkstückauflage bilden, abgesenkt werden. In besonders vorteilhafter Weise ist hierdurch ein einfaches, schnelles und zuverlässiges Ausschleusen von einem oder mehreren ausgeschnittenen Werkstückteilen auf der höhenverstellbaren Auflagefläche möglich. Jedes Werkstückteil, das auf diese Weise ausgeschleust werden soll, muss zwangsläufig eine geeignete Größe haben. Diese ist gegeben, wenn die Abmessung des Werkstückteils geringer ist als die Summe der Abmessungen des mindestens einen höhenverstellbarem Auflagetisches und des Schneidspalts (d.h. Schneidspaltbreite), jeweils bemessen in Richtung der reihenförmigen Anordnung der Auflagetische (d.h. senkrecht zur Erstreckung des Schneidspalts). Im Sinne vorliegender Erfindungsbeschreibung werden derartige Werkstückteile als "mittelgroße" Werkstückteile bezeichnet. In besonders vorteilhafter Weise kann auch während des Ausschleusens von mittelgroßen Werkstückteilen der Schneidprozeß am plattenförmigen Werkstück fortgesetzt werden, was eine besonders effiziente Teilefertigung ermöglicht. Da ein solches mittelgroßes Werkstückteil in aller Regel unmittelbar nach Freischneiden durch die mindestens eine höhenverstellbare Auflagefläche ausgeschleust werden kann, tritt die eingangs geschilderte Kipp-Problematik und die Gefahr einer Kollision mit dem Schneidkopf nicht auf. Die Prozeßsicherheit und Effizienz bei der Teilefertigung können hierdurch erheblich verbessert werden.

Denkbar ist, dass die Vorrichtung zum Ausschneiden von Werkstückteilen zwei höhenverstellbare Auflageflächen aufweist, die dem Schneidspalt jeweils unmittelbar angrenzen, d.h. den Schneidspalt begrenzen, und jeweils zwischen zwei anderen Auflageflächen angeordnet sind. Diese Ausgestaltung ermöglicht insbesondere das zeitgleiche Ausschleusen von Werkstückteilen auf beiden höhenverstellbaren Auflageflächen. Zudem kann ein einziges Werkstückteil auch beiden höhenverstellbaren Auflageflächen gleichzeitig aufliegen, was ermöglicht, dass noch größere Werkstückteile ausgeschleust werden können, als bei der Verwendung nur einer einzigen höhenverstellbaren Auflagefläche. Die Abmessung eines solchen Werkstückteils muss dann geringer sein als die Summe der Abmessungen der beiden höhenverstellbarem Auflagetische und des Schneidspalts (d.h. Schneidspaltbreite), jeweils bemessen in Richtung der reihenförmigen Anordnung der Auflagetische.

Gemäß einer vorteilhaften Ausgestaltung der Vorrichtung zum Ausschneiden von Werkstückteilen sind die Auflageflächen, welche nicht zum Ausschleusen mittelgroßer Werkstückteile dienen, relativ zur äußeren Umgebung positionsfest (d.h. nicht höhenverstellbar) angeordnet. Hierdurch können die Komplexität der Vorrichtung und deren Herstellungskosten vermindert werden.

Gemäß einer vorteilhaften Ausgestaltung umfasst die Vorrichtung zum Ausschneiden von Werkstückteilen aus einem plattenförmigen Werkstück einen Transportmechanismus zum Transportieren eines auf der Werkstückauflage befindlichen plattenförmigen Werkstücks relativ zur äußeren Umgebung bzw. zu den die Auflageflächen bildenden Auflagetischen. Der Transportmechanismus für das plattenförmige Werkstück ist so ausgebildet, dass das Werkstück entlang der reihenförmigen Anordnung der Auflageflächen translatorisch (eindimensional) und bidirektional bewegt werden kann, insbesondere um wahlfrei bestimmbare Abschnitte des plattenförmigen Werkstücks über dem Schneidspalt zu positionieren und Werkstückteile entlang deren Schneidkonturen auszuschneiden. Vorzugsweise weisen die Auflageflächen bildende Auflagetische zu diesem Zweck jeweils ein umlaufend bzw. drehbar gelagertes Endlosband auf, wobei eine obere Bandfläche die Auflagefläche des Auflagetisches bildet. Die Bandfläche ermöglicht in vorteilhafter Weise eine vollflächige Unterstützung des Transportguts, so dass die Gefahr einer Relativbewegung zwischen einem ausgeschnittenen Werkstückteil und dem Restgitter erheblich verringert und die Prozeßsicherheit weiter verbessert wird. Die Endlosbänder der Auflagetische, im Weiteren zur leichteren Bezugnahme auch als "Auflagetisch-Endlosbänder" bezeichnet, sind so ausgebildet, dass ein plattenförmiges Werkstück, das sich auf der Werkstückauflage befindet, in einer Transportrichtung (entlang der reihenförmigen Anordnung der Auflageflächen) oder in der hierzu entgegengesetzten Transportrichtung (d.h. bidirektional) bewegbar ist. Vorzugsweise sind die Auflagetisch-Endlosbänder in Form von Längsförderbändern ausgebildet, wobei die bidirektionale Transportrichtung entlang der reihenförmigen Anordnung der Auflageflächen ist. Die Endlosbänder sind entlang ihrer Dreh- bzw. Transportrichtung in einer Reihe angeordnet, so dass durch einen drehsynchronen Umlauf ein plattenförmiges Werkstück auf der Werkstückauflage in der einen oder anderen Transportrichtung bewegt werden kann.

Vorteilhaft ist jedes Auflagetisch-Endlosband um mindestens zwei zueinander ortsfest angeordnete Umlenkwalzen geführt, die achsparallel angeordnet sind. Eine oder beide Umlenkwalzen eines Endlosbands können aktiv angetrieben sein, um das Endlosband in eine umlaufende Bewegung zu versetzen. Durch die aktiv angetriebenen Endlosbänder der Auflagetische ist ein Transportmechanismus zum Transportieren eines auf der Werkstückauflage befindlichen plattenförmigen Werkstücks relativ zu den die Werkstückauflage bildenden Auflagetischen realisiert. Denkbar ist jedoch auch, dass die Umlenkwalzen passiv angetrieben sind und bei einer Bewegung des Endlosbands nur mitlaufen. In diesem Fall kann das Endlosband durch einen anderen Mechanismus bewegt werden, beispielsweise durch die nachfolgend beschriebene Fixiereinrichtung für das plattenförmige Werkstückteil. Verfügt der Auflagetisch der mindestens einen höhenverstellbaren Auflagefläche über ein Endlosband, ist es bevorzugt, wenn das Endlosband (mit Umlenkwalzen) selbst höhenverstellbar ist, um die Auflagefläche in ihrer Höhe zu verstellen.

In der Vorrichtung zum Ausschneiden von Werkstückteilen aus einem plattenförmigen Werkstück ist es vorteilhaft, wenn mindestens eine Auflagefläche mit einer Fixiereinrichtung zum Fixieren des plattenförmigen Werkstücks und/oder ausgeschnittener Werkstückteile gekoppelt ist. Beispielsweise verfügt die Vorrichtung zu diesem Zweck über eine Klemmvorrichtung zum Klemmen des plattenförmigen Werkstücks gegen eine Auflagefläche. Wenn eine Auflagefläche von der oberen Bandfläche eines Endlosbands gebildet ist, kann durch Fixieren des plattenförmigen Werkstücks an der Bandfläche und Bewegen der Fixiereinrichtung eine Bewegung des Auflagetisch-Endlosbands bewirkt werden. Ist das Auflagetisch-Endlosband selbst angetrieben, ist es vorteilhaft, wenn die Fixiereinrichtung ortsfest zur Auflagefläche ist, d.h. mit der oberen Bandfläche mitbewegt wird.

Vorteilhaft ist die Fixiereinrichtung so ausgebildet, dass das plattenförmige Werkstück an der mindestens einen Auflagefläche flächig fixierbar ist. Beispielsweise umfasst die Fixiereinrichtung zu diesem Zweck eine Mehrzahl Saugöffnungen, die über der Auflagefläche (beispielsweise gleichmäßig) verteilt angeordnet sind. Das plattenförmige Werkstück sowie gegebenenfalls ein oder mehrere ausgeschnittene Werkstückteile können durch Erzeugen eines Unterdrucks in den Saugöffnungen an der Auflagefläche flächig festgelegt werden. Durch diese Maßnahme kann die Gefahr des Verkippens eines ausgeschnittenen Werkstückteils relativ zum Restgitter noch weiter verringert werden.

Wie beschrieben, ermöglicht die höhenverstellbare Auflagefläche ein einfaches und schnelles Entfernen eines ausgeschnittenen Werkstückteils vom Restgitter, wobei das Werkstückteil der höhenverstellbaren Auflagefläche aufliegt und von der Hochposition in eine (wahlfreie) Tiefposition abgesenkt wird, beispielsweise indem der Auflagetisch selbst abgesenkt wird. In Tiefposition kann das Werkstückteil beispielsweise in einen Gutteilbehälter übergeben werden. Wenn die Auflagefläche durch die obere Bandfläche eines aktiv angetriebenen Auflagetisch-Endlosbands gebildet wird, kann durch Aktivieren des Bandtransports das Werkstückteil über den Rand der in Tiefposition befindlichen höhenverstellbaren Auflagefläche transportiert werden, so dass es in den geeignet positionierten Gutteilbehälter fällt. Möglich wäre beispielsweise auch, dass die höhenverstellbare Auflagefläche relativ zur Horizontalen kippbar ausgebildet ist, so dass das Werkstückteil durch Kippen der Auflagefläche von der Auflagefläche abrutscht und beispielsweise in einen Gutteilbehälter fällt. Insbesondere kann der die höhenverstellbare Auflagefläche formende Auflagetisch zu diesem Zweck kippbar ausgebildet sein, wobei die Auflagefläche durch Kippen des Auflagetisches gleichzeitig mit bewegt wird. Insbesondere kann das die höhenverstellbare Auflagefläche bildende Auflagetisch-Endlosband höhenverstellbar und relativ zu Horizontalen kippbar ausgebildet sein.

Gemäß einer weiteren vorteilhaften Ausgestaltung umfasst die Vorrichtung zum Ausschneiden von Werkstückteilen aus einem plattenförmigen Werkstück eine Abtransporteinrichtung für Werkstückteile, welche durch die höhenverstellbare Auflagefläche ausgeschleust werden. Die Abtransporteinrichtung, zur leichteren Bezugnahme auch als "Werkstückteil-Abtransporteinrichtung" bezeichnet, ist so ausgebildet, dass sie das Werkstückteil von der Auflagefläche des Auflagetisches in Tiefposition übernehmen kann. Vorteilhaft umfasst die Werkstückteil-Abtransporteinrichtung zu diesem Zweck ein umlaufend (drehbar) gelagertes, aktiv angetriebenes Endlosband, wobei eine obere Bandfläche eine Auflagefläche für aufzunehmende Werkstückteile bildet. Das Endlosband, zur leichteren Bezugnahme auch als "Werkstückteil-Endlosband" bezeichnet, ist vorzugsweise in Form eines Längsförderbands ausgebildet.

Vorteilhaft ist die Tiefposition der höhenverstellbaren Auflagefläche so gewählt, dass die höhenverstellbare Auflagefläche zur Auflagefläche der Werkstückteil-Abtransporteinrichtung fluchtend (d.h. in einer selben Ebene) angeordnet ist, wodurch eine einfache Übernahme eines Werkstückteils ermöglicht ist. Dies gilt insbesondere für den Fall, dass die beiden Auflageflächen jeweils durch ein aktiv angetriebenes Endlosband gebildet werden. In diesem Fall kann durch einen aktivierten (drehsynchronen) Bandtransport das Werkstückteil in einfacher Weise von der Auflagefläche des Auflagetisches an die obere Bandfläche des Werkstückteil-Endlosbands übergeben und abtransportiert werden. Denkbar ist jedoch auch, dass das Werkstückteil durch bloßes Verkippen der höhenverstellbaren Auflagefläche auf die Werkstückteil-Abtransporteinrichtung gelangt. In diesem Fall ist es vorteilhaft, wenn die Auflagefläche des Auflagetisches in der mindestens einen Tiefposition höher ist als die Auflagefläche der Werkstückteil-Abtransporteinrichtung. Durch die Werkstückteil-Abtransporteinrichtung können insbesondere mittelgroße Werkstückteile abtransportiert und beispielsweise an einen an die Werkstückteil-Abtransporteinrichtung angeschlossenen Gutteilbehälter übergeben werden. Wenn die Werkstückteil-Abtransporteinrichtung ein aktiv angetriebenes Endlosband aufweist, kann der Gutteilbehälter zu diesem Zweck in Transportrichtung unterhalb des Endlosbands so platziert sein, dass über den Rand des Endlosbands transportierte Werkstückteile in den Gutteilbehälter fallen.

Gemäß einer weiteren vorteilhaften Ausgestaltung der Vorrichtung zum Ausschneiden von Werkstückteilen aus einem plattenförmigen Werkstück ist die Werkstückteil-Abtransporteinrichtung, welche insbesondere in Form eines Werkstückteil-Endlosbands ausgebildet ist, so bemessen, dass in Transportrichtung ein Überstand relativ zur Werkstückauflage vorliegt. Hierdurch wird in vorteilhafter Weise eine gute Zugänglichkeit zur Auflagefläche der Werkstückteil-Abtransporteinrichtung geschaffen, wodurch die Entnahme von Werkstückteilen erleichtert ist, beispielsweise durch eine automatisierte Handhabungseinrichtung, wie ein Saugheber. Ergänzend oder alternativ kann die Werkstückteil-Abtransporteinrichtung relativ zur Werkstückauflage bewegbar ausgebildet sein, beispielsweise in Richtung der reihenförmigen Anordnung der Auflagetische (Transportrichtung). Auch diese Maßnahme ermöglicht eine gute Zugänglichkeit und einfache Entnahme von Werkstückteilen von der Auflagefläche der Werkstückteil-Abtransporteinrichtung.

Gemäß einer weiteren vorteilhaften Ausgestaltung umfasst die Vorrichtung zum Ausschneiden von Werkstückteilen aus einem plattenförmigen Werkstück eine Abtransporteinrichtung für Abfallteile. Die Abtransporteinrichtung, auch als "Abfallteil-Abtransporteinrichtung" bezeichnet, ist vorzugsweise so zum Schneidspalt angeordnet, dass durch den Schneidspalt fallende Abfallteile auf die Abfallteil-Abtransporteinrichtung gelangen und abtransportiert werden können. Vorteilhaft umfasst die Abfallteil-Abtransporteinrichtung ein umlaufend (drehbar) gelagertes, aktiv angetriebenes Endlosband, wobei eine obere Bandfläche eine Auflagefläche für Abfallteile bildet. Das Endlosband, zur leichteren Bezugnahmen auch als "Abfallteil-Endlosband" bezeichnet, ist vorzugweise in Form eines Längsförderbands ausgebildet. Vorteilhaft gelangen durch den Schneidspalt fallende Abfallteile direkt auf die Auflagefläche des Abfallteil-Endlosbands. Mittels der Abfallteil-Abtransporteinrichtung können durch den Schneidspalt fallende Abfallteile abtransportiert und beispielsweise an einen an die Abfallteil-Abtransporteinrichtung angeschlossenen Abfallteilbehälter übergeben werden. Wenn die Abfallteil-Abtransporteinrichtung ein aktiv angetriebenes Endlosband aufweist, kann der Abfallteilbehälter in Transportrichtung unterhalb des Endlosbands so platziert sein, dass über den Rand des Endlosbands transportierte Abfallteile in den Abfallteilbehälter fallen.

Mittels der Abfallteil-Abtransporteinrichtung können durch den Schneidspalt fallende Abfallteile ausgeschleust werden, wobei deren Abmessung geringer sein muss, als die Abmessung des Schneidspalts (d.h. Schneidspaltbreite), jeweils bemessen in Richtung der reihenförmigen Anordnung der Auflagetische. Im Sinne vorliegender Erfindungsbeschreibung werden Abfallteile, die durch den Schneidspalt ausgeschleust werden können, als "kleine" Abfallteile bezeichnet. Die Möglichkeit kleine Abfallteile durch den Schneidspalt ausschleusen zu können, ermöglicht eine erhebliche Verbesserung der Effizienz sowie vereinfachte Verfahrensführung bei der Herstellung von Werkstückteilen. Ein Ausschleusen von kleinen Abfallteilen manuell oder automatisiert durch eine Handhabungseinrichtung ist nicht erforderlich.

Analog zu kleinen Abfallteilen können entsprechend bemessene "kleine" Werkstückteile durch den Schneidspalt ausgeschleust werden, wodurch eine weitere erhebliche Verbesserung der Effizienz bei der Teilefertigung ermöglicht ist, da unmittelbar nach Freischneiden eines kleinen Werkstückteils der Schneidprozeß fortgeführt werden kann. Zudem werden kleine Werkstückteile sofort nach Freischneiden vom Restgitter entfernt, so dass die Gefahr eines Verkippens relativ zum Restgitter und die Gefahr einer Kollision mit dem Schneidkopf nicht gegeben ist.

Gemäß einer Ausgestaltung umfasst die Vorrichtung zum Ausschneiden von Werkstückteilen aus einem plattenförmigen Werkstück mindestens ein Ablenkelement mit einer Ablenkfläche für kleine Werkstückteile und/oder Abfallteile, das so zum Schneidspalt angeordnet werden kann, dass durch den Schneidspalt fallende kleine Werkstückteile und/oder Abfallteile auf die Ablenkfläche treffen und abgelenkt werden, beispielsweise in einen Gutteilbehälter bzw. Abfallteilbehälter. Vorzugsweise ist das Ablenkelement in Form einer schwenkbar gelagerten Klappe ausgebildet. Beispielsweise umfasst die Vorrichtung zwei auf einander gegenüberliegenden Seiten des Schneidspalts angeordnete Ablenkelemente, so dass beispielsweise entweder das eine oder andere Ablenkelement in Stellung zum Ablenken von durch den Schneidspalt fallenden kleinen Werkstückteilen und/oder Abfallteilen gebracht werden kann. Hierdurch kann insbesondere eine Sortierung von kleinen Werkstückteilen bzw. Abfallteilen erfolgen. Möglich wäre auch, beide Ablenkelemente gleichzeitig in Stellung zum Ablenken von durch den Schneidspalt fallenden kleinen Werkstückteilen bzw. Abfallteilen zu bringen. Beispielsweise kann das Ablenkelement so angeordnet werden, dass ein Fallkanal zwischen dem Schneidspalt und der Abfallteil-Abtransporteinrichtung durch eine Ablenkfläche des Ablenkelements verengt wird, so dass Abfallteile gegebenenfalls auf die Ablenkfläche treffen und hierdurch zur Abfallteil-Abtransporteinrichtung abgelenkt werden. Insbesondere können zwei beiderseits des Schneidspalts angeordnete Ablenkelemente so angeordnet werden, dass der Fallkanal zur Abfallteil-Abtransporteinrichtung beispielsweise konisch verengt wird, wodurch Abfallteile zuverlässig und sicher auf die Abfallteil-Abtransporteinrichtung gelenkt werden können.

In der Vorrichtung zum Ausschneiden von Werkstückteilen aus einem plattenförmigen Werkstück ist der Schneidstrahl vorzugsweise von einem Schneidkopf geführt, der mit einem Verfahrmechanismus so gekoppelt ist, dass der Schneidkopf innerhalb eines einstellbaren Verfahrbereichs bewegbar ist. Der Verfahrbereich des Schneidkopfes ist so eingestellt, dass sich der Schneidstrahl innerhalb einer Bearbeitungszone befindet, die wiederum innerhalb des Schneidspalts liegt, so dass eine trennende Bearbeitung des Werkstücks nur im Bereich des Schneidspalts erfolgen kann. Die Bearbeitungszone kann dem Schneidspalt entsprechen, aber auch kleiner als der Schneidspalt sein. Typischer Weise tritt der Schneidstrahl aus einem endständigen Abschnitt (Düse) des Schneidkopfs in Richtung des Schneidspalts aus.

Vorzugsweise umfasst die Vorrichtung zum Ausschneiden von Werkstückteilen aus einem plattenförmigen Werkstück einen den Schneidspalt überspannenden Querträger für den Schneidkopf, wobei der Querträger vorzugsweise ortsfest zur äußeren Umgebung und insbesondere zu den die Werkstückauflage bildenden Auflagetischen angeordnet ist. Beispielsweise ist am Querträger eine in Richtung des Schneidspalts (entlang einer erster Achsrichtung) verlaufende erste Linearführung für einen ersten Führungsschlitten angebracht, der seinerseits mit einer zweiten Linearführung in Richtung der in Reihe angeordneten Auflagetische (entlang einer zweiten Achsrichtung) und einem darin geführten zweiten Führungsschlitten versehen ist. Beispielsweise ist der Schneidkopf am zweiten Führungsschlitten angebracht. Der Schneidkopf kann auf diese Weise in einer (beispielsweise horizontalen) Ebene über dem Schneidspalt verfahren werden, um den Schneidstrahl in der Bearbeitungszone auf das Werkstück zu richten. Soll der Schneidkopf ergänzend in einer dritten Achsrichtung (beispielsweise in vertikaler Richtung) verfahren werden, kann der zweite Führungsschlitten mit einer dritten Linearführung entlang der dritten Achsrichtung und einem darin geführten dritten Führungsschlitten versehen sein, wobei der Schneidkopf dann am dritten Führungsschlitten befestigt ist.

Vorzugsweise umfasst die Vorrichtung zum Ausschneiden von Werkstückteilen aus einem plattenförmigen Werkstück mindestens eine Handhabungseinrichtung, die mindestens ein Greiforgan zum Greifen eines Gegenstands aufweist. Durch das Greiforgan kann beispielsweise ein plattenförmiges Werkstück gegriffen und auf der Werkstückauflage zur trennenden Bearbeitung durch den Schneidstrahl abgelegt werden. Zudem kann durch das Greiforgan ein ausgeschnittenes Werkstückteil von der Werkstückauflage entfernt und beispielsweise in einen Gutteilbehälter verbracht werden. Entsprechendes gilt für das Restgitter, das durch das Greiforgan von der Werkstückauflage entfernt werden kann. Vorteilhaft umfasst die Handhabungseinrichtung eine Mehrzahl Greiforgane, die beispielsweise in Form von Saughebern ausgebildet sind. Typischer Weise umfasst ein Saugheber eine Kontaktfläche mit mindestens einer Saugöffnung, wobei durch Erzeugen eines Unterdrucks in der Saugöffnung ein Gegenstand an der Kontaktfläche fixiert werden kann.

Vorteilhaft umfasst die Handhabungseinrichtung eine Linearführung, die vorzugsweise in Richtung der reihenförmigen Anordnung der Auflagetische (erste Achsrichtung) angeordnet ist, wobei in der Linearführung mindestens ein Führungsschlitten geführt ist, an dem mindestens ein Greiforgan befestigt ist. Ergänzend kann das mindestens eine Greiforgan entlang oder entgegen einer oder zwei weiteren Achsrichtungen bewegbar sein, zu welchem Zweck beispielsweise jeweilige Linearführungen mit Führungsschlitten vorgesehen sein können. Durch die Handhabungseinrichtung können ausgeschnittene Werkstückteile von der Werkstückauflage entfernt werden. Grundsätzlich können Werkstückteile beliebiger Größe und Form von der Handhabungseinrichtung aufgenommen werden, jedoch ist es vorteilhaft, wenn nur solche Werkstückteile entnommen werden, die aufgrund ihrer Abmessungen nicht anderweitig ausgeschleust werden können. Dies sind Werkstückteile, deren jeweilige Abmessung gleich oder größer ist als die Summe der Abmessungen des mindestens einen höhenverstellbaren Auflagetisches und des Schneidspalts (d.h. Schneidspaltbreite), jeweils bemessen in Richtung der reihenförmigen Anordnung der Auflagetische. Im Sinne vorliegender Erfindungsbeschreibung werden diese Werkstückteile als "große" Werkstückteile bezeichnet. Hierdurch kann eine besonders effiziente Teilefertigung erreicht werden. Zudem ist hierdurch die Gefahr für das Verkippen von ausgeschnittenen Werkstückteilen relativ zum Restgitter erheblich vermindert. Wird die Werkstückauflage durch Auflageflächen gebildet, die eine vollflächige Unterstützung von ausgeschnittenen Werkstückteilen und Restgitter ermöglichen, so dass eine Relativbewegung zwischen Werkstückteilen und Restgitter vermieden werden kann (beispielsweise durch Bandauflagen), kann die Gefahr des Verkippens auch bei großen Werkstückteilen, die mittels der die Handhabungseinrichtung ausgeschleust werden, erheblich vermindert werden. Dies gilt umso mehr, wenn eine Fixiereinrichtung zur flächigen Fixierung von ausgeschnittenen Werkstückteilen und Restgitter auf der Werkstückauflage vorgesehen ist.

Die Vorrichtung zum Ausschneiden von Werkstückteilen aus einem plattenförmigen Werkstück umfasst eine elektronische Steuer-/Regelungseinrichtung zur Steuerung/Regelung der verschiedenen Prozesse bei der Herstellung von Werkstückteilen, welche zur Durchführung des erfindungsgemäßen Verfahrens programmtechnisch eingerichtet ist.

Die vorstehend genannten Ausgestaltungen der Erfindung sind in Alleinstellung oder in beliebigen Kombinationen einsetzbar, ohne den Rahmen der vorliegenden Erfindung zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine Laserschneidmaschine zur Ausführung des erfindungsgemäßen Verfahrens in perspektivischer Ansicht;
- Fig. 2: einen Teil der Laserschneidmaschine von Figur 1 mit einem modifizierten Querträger und Verfahrmechanismus für den Schneidkopf in einer vergrößerten perspektivischen Ansicht;
- Fig. 3: die Laserschneidmaschine von Fig. 2 in einer Aufsicht von oben;
- Fig. 4: die Laserschneidmaschine von Fig. 2 in einer vergrößerten Schnittansicht (Schnittebene in x-Richtung);
- Fig. 5: die Laserschneidmaschine von Fig. 2 mit verschwenktem Ablenkelement in einer vergrößerten perspektivischen Ansicht;
- Fig. 6: die Laserschneidmaschine von Fig. 2 mit einem abgesenkten mittleren Auflagetisch in einer vergrößerten Schnittansicht (Schnittebene in x-Richtung);
- Fig. 7: die Laserschneidmaschine von Fig. 2 mit einem nicht vollständig abgesenkten mittleren Auflagetisch in einer vergrößerten perspektivischen Ansicht.
- Fig. 8: ein Ablaufdiagramm zur Veranschaulichung des in der Laserschneidmaschine 1 von Fig. 1 ausgeführten Verfahrens.

### Ausführliche Beschreibung der Zeichnungen

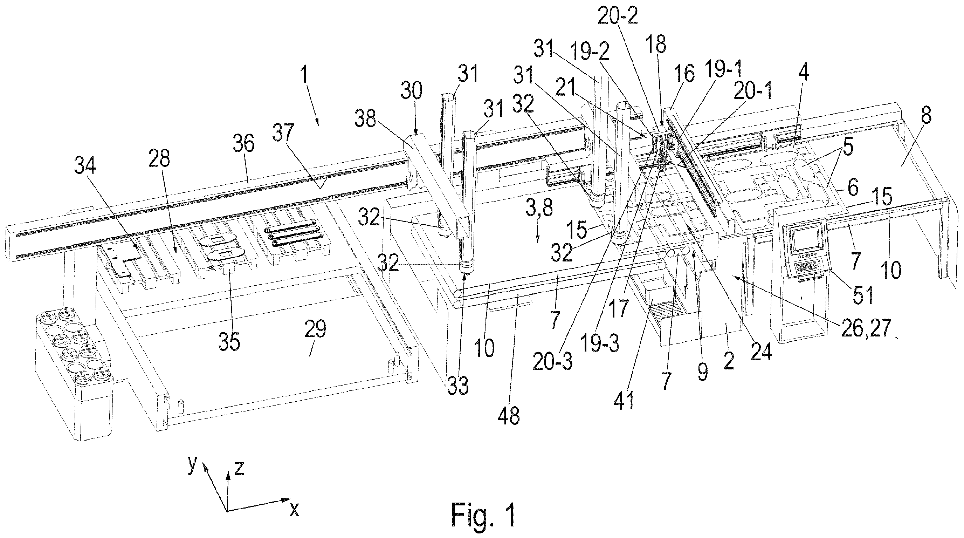

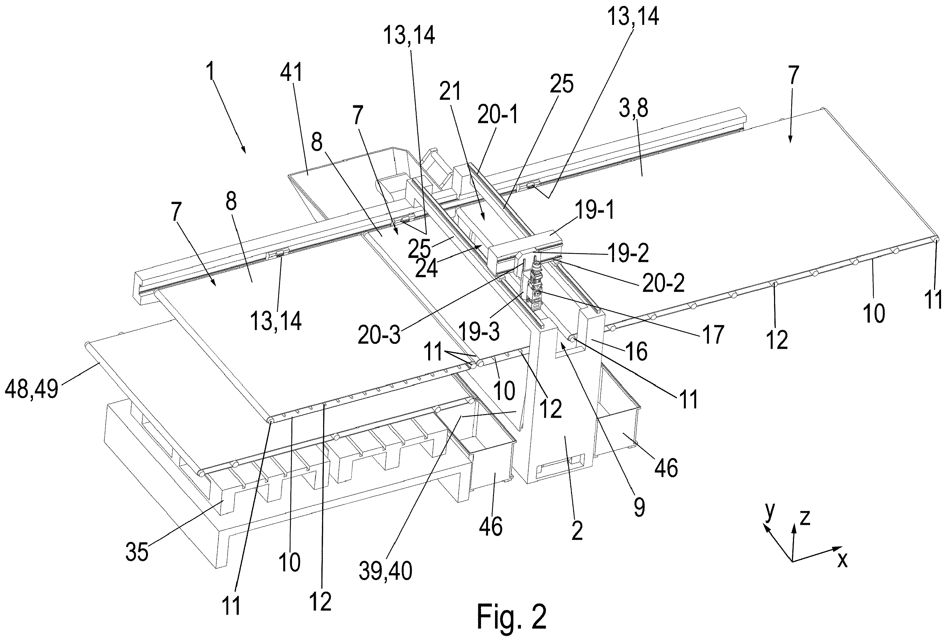

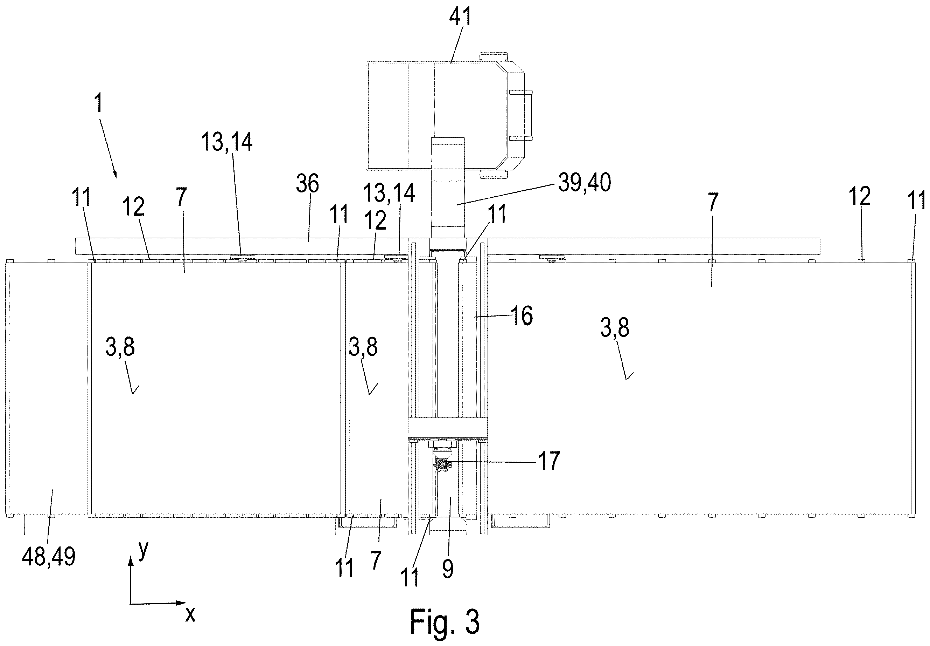

Seien zunächst die Figuren 1 bis 3 betrachtet, worin eine Laserschneidmaschine zur Ausführung des erfindungsgemäßen Verfahrens zum Ausschneiden von Werkstückteilen aus einem plattenartigen Werkstück veranschaulicht ist. Die Laserschneidmaschine ist insgesamt mit der Bezugszahl 1 bezeichnet. Figur 1 zeigt eine perspektivische Ansicht der Laserschneidmaschine 1, Figur 2 einen vergrößerten Teil der Laserschneidmaschine 1, wobei die Laserschneidmaschine 1 eine geringfügige Modifikation gegenüber jener von Figur 1 aufweist, Figur 3 eine Aufsicht der Laserschneidmaschine von Figur 2.

Wie in Figur 1 gezeigt, umfasst die Laserschneidmaschine 1 einen zur äußeren Umgebung ortsfesten Grundkörper 2. Eine plane Werkstückauflage 3 dient zum Auflegen und Transportieren eines plattenförmigen Werkstücks 4 entlang oder entgegen einer ersten Achsrichtung (x-Richtung) relativ zur äußeren Umgebung bzw. zum Grundkörper 2. Aus dem plattenförmigen Werkstück 4 sollen eine Vielzahl Werkstückteile 5 (Gutteile) ausgeschnitten werden, wobei vom plattenförmigen Werkstück 4 nach Ausschneiden mindestens eines Werkstückteils 5 ein Restgitter 6 verbleibt. In Figur 1 sind von dem plattenförmigen Werkstück 4 auszuschneidende Werkstückteile 5 mit verschiedenen Formen und Größen beispielhaft anhand von deren Schneidkonturen angegeben. Bei dem plattenförmigen Werkstück 4 handelt es sich beispielsweise um eine Blechtafel, aus der Blechteile mit gleichen oder unterschiedlichen Formen und Größen auszuschneiden sind.

Wie insbesondere in der Aufsicht von Figur 3 gut erkennbar, verfügt die Laserschneidmaschine 1 über drei reihenförmig in x-Richtung nacheinander angeordnete (separate bzw. voneinander getrennte) Auflagetische 7. Die beiden äußeren Auflagetische 7 sind jeweils ortsfest zur äußeren Umgebung bzw. zum Grundkörper 2 gelagert. Der mittlere Auflagetisch 7 ist sowohl in x-Richtung als auch in y-Richtung ortsfest zum Grundkörper 2 gelagert, jedoch in z-Richtung verstellbar gelagert (höhenverstellbar). Zwischen dem mittleren Auflagetisch 7 und einem der beiden äußeren Auflagetische 7 (in den Figuren beispielsweise der rechte Auflagetisch 7) liegt ein als Schneidspalt 9 dienender Zwischenraum vor.

In der beispielhaften Ausgestaltung umfassen die Auflagetische 7 jeweils ein Auflagetisch-Endlosband 10 (Längsförderband), das um zwei in x-Richtung voneinander beabstandete, zueinander feststehend angeordnete Umlenkwalzen 11 geführt ist.

Hierdurch wird eine umlaufende (drehbare) Lagerung des Auflagetisch-Endlosbands 10 erreicht. Die obere Bandfläche der Auflagetisch-Endlosbänder 10 bildet jeweils eine Auflagefläche 8 für das plattenförmige Werkstück 4, so dass jeder Auflagetisch 7 über eine eigene Auflagefläche 8 verfügt, die von den anderen Auflageflächen 8 verschieden ist. Die Umlenkwalzen 11 der Auflagetisch-Endlosbänder 10 sind achsparallel in y-Richtung angeordnet. Eine oder beide Umlenkwalzen 11 eines selben Auflagetisch-Endlosbands 10 sind aktiv angetrieben, um das Band in eine umlaufende Bewegung entlang oder entgegen der x-Richtung zu versetzen. Zwischen den Umlenkwalzen 11 eines selben Auflagetisch-Endlosbands 10 befinden sich jeweils nicht aktiv angetriebene Stützwalzen 12, die bei einer Bewegung des Auflagetisch-Endlosbands 10 passiv mitlaufen. Die Stützwalzen 12 dienen für eine bodenseitige Abstützung der Auflageflächen 8. Zwischen dem mittleren Auflagetisch 7 und dem auf derselben Seite des Schneidspalts 9 befindlichen, unmittelbar angrenzenden Auflagetisch 7 liegt ein sehr geringer Zwischenabstand vor, der nicht als Schneidspalt dient und lediglich einen störungsfreien Umlauf der angrenzenden Auflagetisch-Endlosbänder 10 ohne Berührungskontakt ermöglicht. Demnach weisen einander unmittelbar benachbarte Auflageflächen 8 in x-Richtung einen räumlichen Abstand voneinander auf.

Die Auflageflächen 8 der drei Auflagetische 7 sind in einer selben horizontalen Ebene angeordnet und formen gemeinsam die ebene Werkstückauflage 3 für ein plattenförmiges Werkstück 4. Falls der mittlere Auflagetisch 7 nach unten abgesenkt wird, formen die Auflageflächen 8 der beiden äußeren Auflagetische 7 weiterhin gemeinsam die ebene Werkstückauflage 3.

Wie insbesondere in der vergrößerten perspektivischen Ansicht von Figur 2 gut erkennbar, verfügt jeder Auflagetisch 7 über eine Fixiereinrichtung 13 zum Festlegen eines plattenförmigen Werkstücks 4 an der Auflagefläche 8. In dem in den Figuren veranschaulichten Ausführungsbeispiel ist die Fixiereinrichtung 13 beispielsweise als Klemmeinrichtung ausgebildet, welche mindestens eine Klemmpratze 14 umfasst, durch die ein plattenförmiges Werkstück 4 gegen die Auflagefläche 8 geklemmt werden kann. Die Klemmpratzen 14 sind jeweils am seitlichen Rand der Auflagefläche 8 angeordnet und in x-Richtung verfahrbar geführt. Bei der Bewegung einer Auflagefläche 8 durch Rotieren des zugehörigen Auflagetisch-Endlosbands 10 wird die Klemmpratze 14 in entsprechender Weise mitbewegt, so dass es keine Relativbewegung zwischen Klemmpratze 14 und Auflagefläche 8 gibt. Wie bereits ausgeführt, kann eine Bewegung der Auflagetisch-Endlosbänder 10 durch aktives Antreiben der Umlenkwalzen 11 erfolgen. Denkbar wäre auch, die Auflagetisch-Endlosbänder 10 durch aktives Bewegen der Klemmpratzen 14 anzutreiben und die Umlenkwalzen 11 nur passiv mitlaufen zu lassen.

Durch einen drehsynchronen Umlauf der Auflagetisch-Endlosbänder 10 der die Werkstückauflage 3 formenden Auflageflächen 8 kann ein auf der Werkstückauflage 3 befindliches Werkstück 4 entlang oder entgegen x-Richtung (bidirektional) bewegt werden. Das Werkstück 4 kann hierdurch in gewünschter Weise zum Schneidspalt 9 positioniert werden. Wie in Figur 1 veranschaulicht, kann das Werkstück 4 insbesondere so positioniert werden, dass es den Schneidspalt 9 überspannt und den Auflageflächen 8 der beiden äußeren Auflagetische 7 gleichzeitig aufliegt. Das plattenförmige Werkstück 4 weist typischer Weise eine entsprechend groß dimensionierte Abmessung in Transportrichtung der Auflagetisch-Endlosbänder 10 (x-Richtung) auf.

Die Werkstückauflage 3 wird in einer zweiten Achsrichtung (y-Richtung)von einem Querträger 16 überspannt, der als Teil des Grundkörpers 2 ortsfest zur äußeren Umgebung angeordnet ist. Am Querträger 16 ist ein (Laser-)Schneidkopf 17 angebracht, der durch einen Verfahrmechanismus 18 entlang dreier Achsrichtungen verfahrbar ist. Ein Ausführungsbeispiel für den Verfahrmechanismus 18 ist in Figur 1 veranschaulicht. Demnach umfasst der Verfahrmechanismus 18 beispielsweise einen ersten Führungsschlitten 19-1, der entlang erster Führungsschienen 20-1, die am Querträger 16 in dessen Erstreckungsrichtung angebracht sind, in y-Richtung verfahrbar geführt ist. Am ersten Führungsschlitten 19-1 sind zweite Führungsschienen 20-2 in x-Richtung angebracht (in Figur 1 nicht sichtbar), entlang derer ein zweiter Führungsschlitten 19-2 verfahrbar geführt ist. Am zweiten Führungsschlitten 19-2 sind dritte Führungsschienen 20-3 in einer dritten Achsrichtung (z-Richtung)angebracht, entlang derer ein den Schneidkopf 17 tragender dritter Führungsschlitten 19-3 verfahrbar geführt ist. Der Schneidkopf 17 kann somit in einer Ebene parallel zur horizontalen Werkstückauflage 3 verfahren werden, wobei der Verfahrmechanismus 18 so ausgebildet ist, dass der Schneidkopf 17 nur in einem (wahlfrei vorgebbaren) bestimmten Verfahrbereich 21 verfahrbar ist. Die bewirkt, dass ein vom Schneidkopf 17 geführter Laserstrahl (nicht gezeigt) nur in einer Bearbeitungszone 24 auf das Werkstück 4 treffen kann, welche innerhalb des Schneidspalts 9 liegt. Zudem ist der Schneidkopf 17 in z-Richtung höhenverfahrbar, wodurch der Abstand senkrecht zur Werkstückauflage 3 verändert werden kann.

In der Modifikation von Figur 2 ist eine Variante des Verfahrmechanismus 18 veranschaulicht. Hier umfasst der Querträger 16 zwei parallele Streben 25, an denen an einem oberen Wandabschnitt erste Führungsschienen 20-1 in Erstreckungsrichtung der Streben 25 angebracht sind. An den ersten Führungsschienen 20-1 ist ein erster Führungsschlitten 19-1 in y-Richtung verfahrbar geführt. Am ersten Führungsschlitten 19-1 sind zweite Führungsschienen 20-2 in x-Richtung angebracht, entlang derer ein zweiter Führungsschlitten 19-2 verfahrbar geführt ist. Weiterhin sind am zweiten Führungsschlitten 19-2 dritte Führungsschienen 20-3 in z-Richtung angebracht, entlang derer ein den Schneidkopf 17 tragender dritter Führungsschlitten 19-3 verfahrbar geführt ist. Der Schneidkopf 17 befindet sich in einem Zwischenraum zwischen den beiden Streben 25 des Querträgers 16. Auch bei dieser Variante ist der Verfahrbereich 21 so ausgebildet, dass der vom Schneidkopf 17 geführte Laserstrahl nur in einer Bearbeitungszone 24 auf das Werkstück 4 treffen kann, die innerhalb des Schneidspalts 9 liegt. Ergänzend kann der Schneidkopf 17 in z-Richtung verstellt werden, um den Abstand senkrecht zur Werkstückauflage 3 zu verändern. In den beiden Varianten umfasst der Verfahrmechanismus 18 jeweils paarweise angeordnete Führungsschienen 20-1, 20-2, 20-3, wobei es sich versteht, dass eine kleinere oder größere Anzahl von Führungsschienen vorgesehen sein kann.

Eine Relativbewegung entlang oder entgegen der x-Richtung (Bandtransportrichtung) zwischen Schneidkopf 17 und Werkstück 4 kann durch alleiniges Verfahren des Schneidkopfs 17 bei unbewegtem Werkstück 4, durch eine Verfahrbewegung in x-Richtung des Schneidkopfs 17 und gleichzeitigem Transport des Werkstücks 4, oder durch alleiniges Transportieren des Werkstücks 4 bei zumindest bezüglich der x-Richtung unbewegtem Schneidkopf 17 erfolgen. Eine Relativbewegung entlang oder entgegen der y-Richtung sowie entlang oder entgegen der z-Richtung zwischen Schneidkopf 17 und Werkstück 4 erfolgt stets durch Verfahren des Schneidkopfs 17 bei unbewegtem Werkstück 4. Denkbar wäre, den Verfahrmechanismus 18 so auszubilden, dass der Schneidkopf 17 nur in y-Richtung, sowie optional in z-Richtung, verfahrbar ist, wobei ungeachtet prozeßtechnischer Nachteile eine Relativbewegung zwischen Schneidkopf 17 und Werkstück 4 in x-Richtung ausschließlich durch die Werkstückauflage 3 erfolgt.

Der Schneidkopf 17 dient zum Führen eines Laserstrahls, der von einer nicht näher dargestellten Laserstrahlquelle 26 erzeugt und durch lichtleitende Elemente, beispielsweise ein Strahlführungsrohr und Umlenkspiegel, zum Schneidkopf 17 geführt wird. Als Laserstrahlquelle 26 kann beispielweise ein Gaslaser, wie ein CO₂-Laser, oder ein Festkörperlaser, eingesetzt werden. Im Schneidkopf 17 befindet sich eine Fokussiereinrichtung mit optischen Elementen zum Fokussieren des Laserstrahls auf das plattenförmige Werkstück 4. Die Fokussiereinrichtung kann beispielsweise eine Fokussierlinse oder eine adaptive Optik umfassen. Der Laserstrahl tritt durch eine endständige Düse aus dem Schneidkopf 17 aus.

Der Schneidkopf 17 dient weiterhin zum Führen eines Arbeitsgasstrahls (nicht gezeigt), der auf die Bearbeitungsstelle des Laserstrahls gerichtet wird und dazu dient, die beim Laserschneiden erzeugte Schmelze aus der Schnittfuge des Werkstücks 4 zu treiben. Der Arbeitsgasstrahl wird von einer nicht näher dargestellten Arbeitsgasquelle 27 erzeugt. Als inertes Arbeitsgas wird beispielsweise Helium (He), Argon (Ar) oder Stickstoff (N₂) eingesetzt. Als reaktives Arbeitsgas wird beispielsweise Sauerstoff (O₂) verwendet. Möglich ist auch die Verwendung von Gasgemischen oder Druckluft. Der Arbeitsgasstrahl tritt aus der Düse des Schneidkopfs 17 aus, wird koaxial zum Laserstrahl an die Bearbeitungsstelle geführt und trifft dort mit einem von der Arbeitsgasquelle 27 vorgegebenen (initialen) Gasdruck von beispielsweise 0,5-25 bar auf das plattenförmige Werkstück 4 auf.

Wie in Figur 1 gezeigt, umfasst die Laserschneidmaschine 1 weiterhin eine Lagerzone 28 mit einem in Verlängerung der Werkstückauflage 3 (in x-Richtung) angeordneten Lagertisch 29, auf dem plattenförmige Werkstücke 4 stapelförmig vor deren Prozessierung gelagert werden können. Mittels einer Handhabungseinrichtung 30 kann ein plattenförmiges Werkstück 4 vom Lagertisch 29 aufgenommen und auf der Werkstückauflage 3 abgelegt werden. Die Handhabungseinrichtung 30 umfasst mehrere Greiforgane 31, die hier beispielsweise als Saugheber ausgebildet sind. Jedes Greiforgan 31 weist einen Endabschnitt 32 mit einer nach unten weisenden Kontaktfläche 33 für einen aufzunehmenden Gegenstand auf. Die Kontaktfläche 33 verfügt über mindestens eine Saugöffnung. Durch Erzeugen eines Unterdrucks in der mindestens einen Saugöffnung kann ein Gegenstand angesaugt, zur Anlage gegen die Kontaktfläche 33 gebracht und an der Kontaktfläche 33 festgelegt werden. Wird die Saugwirkung vermindert, kann der an der Kontaktfläche 33 festgelegte Gegenstand wieder gelöst werden. Die Greiforgane 31 dienen insbesondere dazu, große Werkstückteile 5 von der Werkstückauflage 3 aufzunehmen und beispielsweise auf Paletten 35 abzulegen, die insbesondere in einer Gutteilablage 34 gelagert werden können. Die Paletten 35 sind zu diesem Zweck geeignet zu positionieren.

Wie in Figur 1 gezeigt, umfasst die Handhabungseinrichtung 30 einen in x-Richtung sich erstreckenden Längsträger 36, an dem Längsträgerführungsschienen 37 in Erstreckungsrichtung angebracht sind. Der Längsträger 36 erstreckt sich über den Bereich der Lagerzone 28 und zumindest einen Teilbereich der Werkstückauflage 3. In den Längsträgerführungsschienen 37 ist mindestens ein Greiforganträger 38 entlang und entgegen der x-Richtung verfahrbar geführt. In der Ausgestaltung von Figur 1 sind beispielhaft zwei Greiforganträger 38 vorgesehen. Die länglichen Greiforganträger 38 erstrecken sich in y-Richtung und sind so dimensioniert, dass sie die Werkstückauflage 3 in y-Richtung überspannen. Die Greiforganträger 38 sind beispielsweise starr miteinander verbunden, so dass sie nur gemeinsam verfahrbar sind. Alternativ ist es möglich, die Greiforganträger 38 individuell verfahrbar auszubilden, wobei insbesondere ein Zwischenabstand zwischen benachbarten Greiforganträgern 38 veränderbar ist. An den Greiforganträgern 38 ist jeweils mindestens ein längliches Greiforgan 31 angebracht, das senkrecht zum Greiforganträger 38 in z-Richtung ausgerichtet ist, wobei die Kontaktfläche 33 nach unten weist. In der Ausgestaltung von Figur 1 sind beispielhaft zwei Greiforgane 31 pro Greiforganträger 38 vorgesehen. Das mindestens eine Greiforgan 31 kann am zugehörigen Greiforganträger 38 ortsfest angebracht sein. Möglich ist jedoch auch, dass das Greiforgan 31 am Greiforganträger 38 so angebracht ist, dass es relativ zum Greiforganträger 38 in y-Richtung und/oder z-Richtung verfahrbar ist. Insbesondere kann hierdurch die Position eines Greiforgans 31 am Greiforganträger 38 in y-Richtung verändert werden. Zudem ist eine Höhenverstellung der Kontaktfläche 33 möglich, insbesondere um die Aufnahme und das Ablegen eines Gegenstands zu erleichtern.

In der Ausgestaltung von Figur 1 umfasst die Handhabungseinrichtung 30 beispielhaft zwei Greiforganträger 38 mit jeweils zwei Greiforganen 31, wodurch ein plattenförmiges Werkstück 4 zuverlässig und sicher an vier räumlich voneinander beabstandeten Stellen aufgenommen und gehalten werden kann. Es versteht sich, dass die Zahl der Greiforganträger 38 und Greiforgane 31 dem gewünschten Zweck angepasst werden kann. Gleichermaßen kann eine größere oder kleinere Anzahl von Längsträgerführungsschienen 37 vorgesehen sein.

Das plattenförmige Werkstück 4 kann durch Transportieren auf der Werkstückauflage 3 (drehsynchroner Umlauf der Endlosbänder 10) in eine Position relativ zum Schneidspalt 9 gebracht werden, in der sich ein wahlfrei bestimmbarer Abschnitt des plattenförmigen Werkstücks 4 in der Bearbeitungszone 24 des Schneidkopfs 17 über dem Schneidspalt 9 befindet. Dies kann ein Randabschnitt an einer Werkstückkante 15 des Werkstücks 4 sein, wobei das Werkstück 4 dem nächstliegenden Auflagetisch 7 jenseits des Schneidspalts 9 nicht aufliegt, oder ein zwischen den beiden Werkstückkanten 15 befindlicher innenliegender Abschnitt des Werkstücks 4, wobei das Werkstück 4 den Schneidspalt 9 überspannt und mindestens zwei Auflageflächen 8 beiderseits des Schneidspalts 9 aufliegt.

Abhängig von der jeweiligen Größe und Form kann sich die Schneidkontur eines Werkstückteils 5 beispielsweise vollständig innerhalb der Bearbeitungszone 24 des Laserstrahls befinden. Das Werkstückteil 5 kann dann ausgeschnitten werden, ohne dass ein Transport des Werkstücks 4 auf der Werkstückauflage 3 erforderlich ist. Falls das Werkstückteil 5 eine Abmessung in x-Richtung aufweist, die kleiner ist als die Breite des Schneidspalts 9 (in x-Richtung bemessen), handelt es sich um ein kleines Werkstückteil 5, das über den Schneidspalt 9 ausgeschleust werden kann. Entsprechendes gilt für die Abmessungen kleiner Abfallteile, die ebenfalls über den Schneidspalt 9 ausgeschleust werden können. Wenn die Schneidkontur eines Werkstückteils 5 größer ist als die Bearbeitungszone 24 des Laserstrahls, ist ein Transport des Werkstücks 4 auf der Werkstückauflage 3 erforderlich (drehsynchroner Antrieb der Endlosbänder 10), um einen jeweiligen Abschnitt der Schneidkontur in die Bearbeitungszone 24 des Laserstrahls zu bringen und das Werkstückteil 5 vollständig auszuschneiden. Falls das Werkstückteil 5 eine Abmessung in x-Richtung aufweist, die kleiner ist als die Summe aus der Abmessung des mittleren Auflagetisches 7 und der Breite des Schneidspalts 9 (jeweils in x-Richtung bemessen), handelt es sich um ein mittelgroßes Werkstückteil 5, das über den höhenverstellbaren mittleren Auflagetisch 7 ausgeschleust werden kann. Falls das Werkstückteil 5 eine Abmessung in x-Richtung aufweist, die gleich oder größer ist als die Summe aus der Abmessung des mittleren Auflagetisches 7 und der Breite des Schneidspalts 9 (jeweils in x-Richtung bemessen), handelt es sich um ein großes Werkstückteil 5, das manuell oder über die Handhabungseinrichtung 30 von der Werkstückauflage 3 entfernt wird. Es versteht sich, dass kleine und mittelgroße Werkstückteile 5 jeweils über eine Abmessung in y-Richtung verfügen, die kleiner ist als die Abmessung des Schneidspalts in y-Richtung 9 (Schneidspaltlänge).

Zunächst wird das Ausschleusen kleiner Abfallteile über den Schneidspalt 9 erläutert. Der Grundkörper 2 der Laserschneidmaschine 1 umfasst zu diesem Zweck eine bodenseitig, unterhalb des Schneidspalts 9 angeordnete Abfallteil-Abtransporteinrichtung 39, die ein aktiv angetriebenes Abfallteil-Endlosband 40 umfasst. Das Abfallteil-Endlosband 40 ist ein Längsförderband. Das Abfallteil-Endlosband 40 erstreckt sich in y-Richtung mindestens entlang der Länge des Schneidspalts 9 und weist in x-Richtung eine Breite auf, die vorteilhaft mindestens der Breite des Schneidspalts 9 entspricht. Das Abfallteil-Endlosband 40 befindet sich im Fallkanal 44 von durch den Schneidspalt 9 fallenden Abfallteilen, so dass, wenn ein kleines Abfallteil durch den Schneidspalt 9 fällt, es auf das Abfallteil-Endlosband 40 gelangt und abtransportiert werden kann. Wie beispielsweise in den Figuren 2 und 3 gezeigt, kann am Ende des Abfallteil-Endlosbands 40 ein Abfallbehälter 41 vorgesehen sein, in den über den Rand des Abfallteil-Endlosbands 40 transportierte Abfallteile fallen können. Durch die Möglichkeit kleine Abfallteile schon beim Freischneiden über den Schneidspalt 9 auszuschleusen, kann die Effizienz in der Teilefertigung erheblich verbessert werden. Zudem wird durch das sofortige Entfernen der kleinen Abfallteile vom Restgitter 6 die Prozeßsicherheit im Hinblick auf die Gefahr einer Kollision mit dem Schneidkopf 17 verbessert.

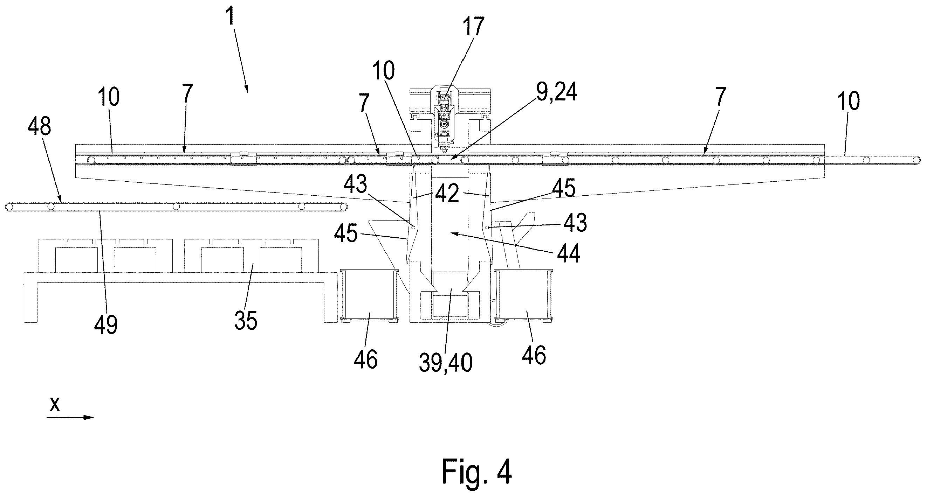

Wird ein kleines Werkstückteil 5 aus dem plattenförmigen Werkstück 4 ausgeschnitten, kann es gleichermaßen über den Schneidspalt 9 ausgeschleust werden. In diesem Zusammenhang sei ergänzend Figur 4 betrachtet, worin die Laserschneidmaschine 1 der Figuren 2 und 3 in einer vergrößerten (Teil-)Schnittansicht (Schnittebene in x-Richtung) gezeigt ist. Demnach verfügt der Grundkörper 2 der Laserschneidmaschine 1 zu diesem Zweck über mindestens ein Ablenkelement 42 zum Ablenken von durch den Schneidspalt 9 fallenden kleinen Werkstückteilen 5, das hier beispielsweise in Form einer schwenkbaren Klappe ausgebildet ist. Das Ablenkelement 42 ist um die Schwenkachse 43 schwenkbar gelagert. In der in Figur 4 gezeigten beispielhaften Ausgestaltung sind zwei schwenkbare Ablenkelemente 42 beiderseits des Fallkanals 44 für Abfallteile vorgesehen. In Figur 4 ist eine Situation dargestellt, bei der die beiden Ablenkelemente 42 jeweils eine vertikale Position einnehmen und somit den Fallkanal 44 zwischen Schneidspalt 9 und Abfallteil-Endlosband 40 freigeben. Durch den Schneidspalt 9 fallende Abfallteile gelangen somit auf das Abfallteil-Endlosband 40 und können abtransportiert werden. Jedes Ablenkelement 42 weist auf einer Seite eine ebene Ablenkfläche 45 für auftreffende kleine Werkstückteile 5 auf. Soll ein durch den Schneidspalt 9 fallendes, kleines Werkstückteil 5 ausgeschleust werden, wird wahlweise eines der beiden Ablenkelemente 42 so verschwenkt, dass es sich im Fallkanal 44 zwischen Schneidspalt 9 und Abfallteil-Endlosband 40 befindet und den Fallkanal 44 wenigstens teilweise, vorzugsweise vollständig quert. Hierbei wird die Ablenkfläche 45 in einem von 0° verschiedenen Winkel zur Horizontalen schräg im Fallkanal 44 angeordnet. Durch den Schneidspalt 9 fallende kleine Werkstückteile 5 treffen dann auf die Ablenkfläche 45 und werden aus dem Fallkanal 44 gelenkt. Beidseitig neben dem Grundkörper 2 befindet sich jeweils ein Gutteilbehälter 46, in den, je nach Stellung des zugehörigen Ablenkelements 42, kleine Werkstückteile 5 abgelenkt werden können. Auf diese Weise kann auch eine Sortierung von kleinen Werkstückteilen 5 erfolgen.

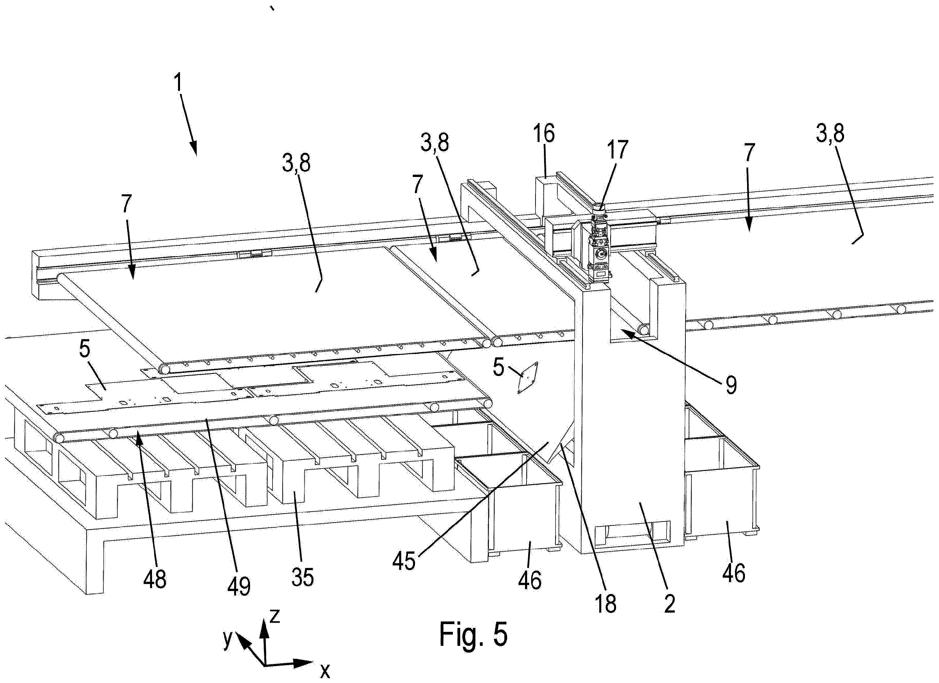

Ergänzend sei nun Figur 5 betrachtet, worin die Laserschneidmaschine 1 von Fig. 2 mit einem verschwenkten Ablenkelement 42 in einer vergrößerten perspektivischen (Teil-)Ansicht gezeigt ist. Das Ablenkelement 42 ist beispielsweise in einem Winkel von ca. 45° zur Horizontalen geneigt, so dass auf die plane Ablenkfläche 45 treffende kleine Werkstückteile 5 in den unterhalb des Ablenkelements 42 angeordneten Gutteilbehälter 46 abgelenkt werden können. Es versteht sich, dass das Ablenkelement 42 in einem beliebigen Winkel schräg zur Horizontalen angeordnet werden kann, solange gewährleistet ist, dass auf die Ablenkfläche 45 treffende kleine Werkstückteile 5 in einen Bereich außerhalb des Fallkanals 44 abgelenkt werden können. In Figur 5 ist beispielhaft ein kleines Werkstückteil 5 auf der Ablenkfläche 45 dargestellt. Der neben dem Grundkörper 2 platzierte Gutteilbehälter 46 kann in einfacher Weise aus der Laserschneidmaschine 1 entnommen und beispielsweise durch einen leeren Gutteilbehälter 46 ersetzt werden. Durch die Möglichkeit kleine Werkstückteile 5 über den Schneidspalt 9 auszuschleusen, kann die Effizienz in der Teilefertigung erheblich verbessert werden. Eine zeit- und kostenintensive manuelle oder automatisierte Entnahme ist nicht erforderlich. Insbesondere kann den Schneidprozeß schon unmittelbar nach dem Freischneiden eines kleinen Werkstückteils 5 fortgesetzt werden. Zudem wird durch das Entfernen der kleinen Werkstückteile 5 vom Restgitter 6 im Moment des Freischneidens die Prozeßsicherheit im Hinblick auf die Gefahr einer Kollision mit dem Schneidkopf 17 verbessert.

Denkbar wäre, für das Ausschleusen von kleinen Abfallteilen die beiden Ablenkelemente 42 so zu verschwenken, dass eine beispielweise konische Verengung des Fallkanals 44 zum Abfallteil-Endlosband 40 hin geschaffen wird, so dass durch den Schneidspalt 9 fallende kleine Abfallteile gegebenenfalls auf die beiden Ablenkflächen 45 treffen und auf das Abfallteil-Endlosband 40 abgelenkt werden. In diesem Fall kann das Abfallteil-Endlosband 40 auch eine geringere Breite als die Spaltbreite des Schneidspalts 9 aufweisen.

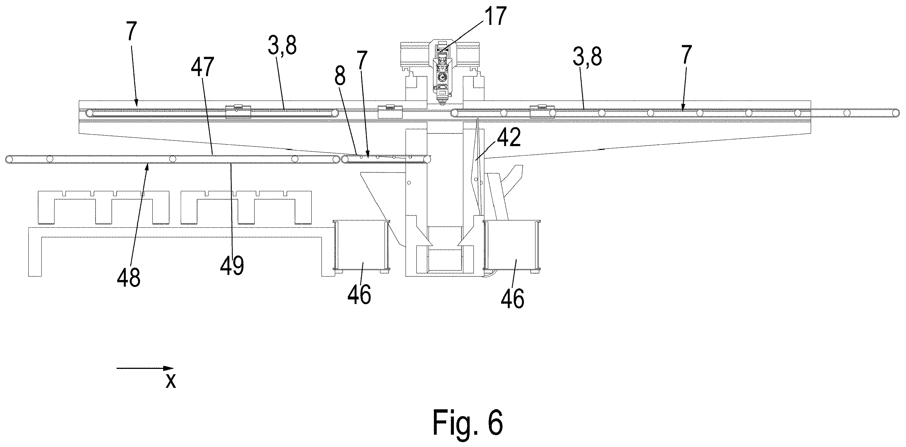

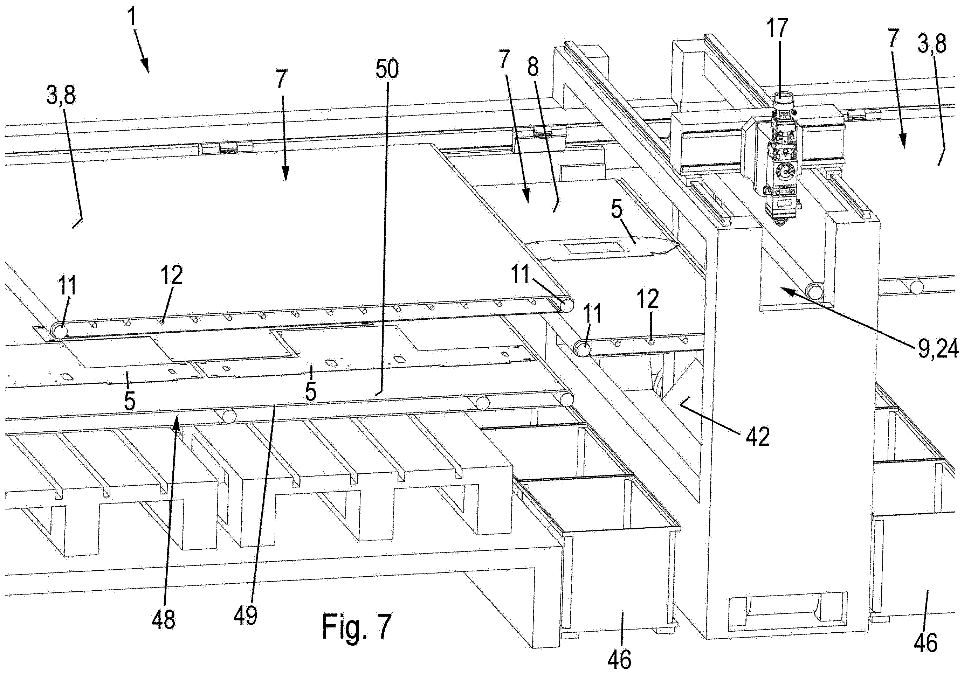

Im Weiteren wird das Ausschleusen von mittelgroßen Werkstückteilen 5 durch Absenken des mittleren Auflagetisches 7 beschrieben. Hierzu wird ergänzend Bezug auf die Figuren 6 und 7 genommen, worin die Laserschneidmaschine 1 mit einem vollständig (Figur 6) sowie teilweise (Figur 7) abgesenkten mittleren Auflagetisch 7 gezeigt ist.

Wie bereits ausgeführt, ist der mittlere Auflagetisch 7 höhenverfahrbar ausgebildet, d.h. entlang oder entgegen der z-Richtung verstellbar. Dies kann durch einen nicht näher dargestellten Bewegungsmechanismus erfolgen, beispielsweise durch Anbringen des mittleren Auflagetisches 7 an einem Führungsschlitten, der in vertikal gerichteten Führungsschienen geführt ist, und Bewegen des Führungsschlittens durch einen elektrischen Linearantrieb. Auf diese Weise kann der mittlere Auflagetisch 7 zwischen einer ersten Position, auch Hochposition genannt (beispielsweise in den Figuren 2, 4 und 5 gezeigt), und mindestens einer zweiten Position, auch Tiefposition genannt (in Figur 6 gezeigt), verfahren werden. In Hochposition formt die Auflagefläche 8 des mittleren Auflagetisches 7 gemeinsam mit den Auflageflächen 8 der beiden anderen Auflagetische 7 die ebene Werkstückauflage 3. In der in Figur 6 gezeigten Tiefposition kann ein auf der Auflagefläche 8 befindliches mittelgroßes Werkstückteil 5 von der Auflagefläche 8 entfernt werden.

Für das Ausschleusen mittelgroßer Werkstückteile 5 umfasst die Laserschneidmaschine 1 eine unterhalb der die Werkstückauflage 3 formenden Auflagetische 7 angeordnete Werkstückteil-Abtransporteinrichtung 48, die hier beispielsweise ein aktiv angetriebenes Werkstückteil-Endlosband 49 mit einer oberen Bandauflage 50 für den Transport von mittelgroßen Werkstückteilen 5 umfasst. Das Werkstückteil-Endlosband 49 erstreckt sich in x-Richtung und ist als Längsförderband ausgebildet. Die Transportrichtung der Bandauflage 50 ist hier beispielsweise entgegen der x-Richtung. Das Werkstückteil-Endlosband 49 weist einen Überstand in x-Richtung relativ zur Werkstückauflage 3 auf.

Wie in Figur 6 gezeigt, ist der mittlere Auflagetisch 7 in Tiefposition so weit abgesenkt, dass seine Auflagefläche 8 fluchtend zur oberen Bandauflage 50 des Werkstückteil-Endlosbands 49 (d.h. in einer gemeinsamen Ebene) angeordnet ist. Durch drehsynchrones Drehen der beiden Endlosbänder kann das Werkstückteil 5 in einfacher Weise vom Auflagetisch 7 auf das Werkstückteil-Endlosband 49 übergeben und abtransportiert werden. Durch den Überstand des Werkstückteil-Endlosbands 49 relativ zur Werkstückauflage 3 sind Werkstückteile 5 auf der Bandauflage 50 gut zugänglich und können manuell oder beispielsweise durch die Handhabungseinrichtung 30 in einfacher Weise entnommen werden. Ergänzend oder alternativ zum Überstand kann das Werkstückteil-Endlosband 49 beispielsweise entlang oder entgegen x-Richtung verfahrbar sein, um eine einfache Entnahme eines Werkstückteils 5 von der Bandauflage 50 zu ermöglichen. Möglich wäre auch, einen Gutteilbehälter am Ende des Werkstückteil-Endlosbands 49 zu platzieren, so dass über das Ende des Werkstückteil-Endlosbands 49 hinaus transportierte Werkstückteile 5 in den Gutteilbehälter fallen können.

In Figur 7 ist eine Situation gezeigt, bei der sich der mittlere Auflagetisch 7, auf dessen Auflagefläche 8 ein mittelgroßes Werkstückteil 5 beispielhaft dargestellt ist, in einer Zwischenposition während des Absenkens in die in Figur 6 gezeigte Tiefposition befindet. Nach Übernahme des Werkstückteils 5 durch das Werkstückteil-Endlosband 49 kann der mittlere Auflagetisch 7 in seine Hochposition nach oben verfahren werden, bei der seine Auflagefläche 8 (wieder) Teil der ebenen Werkstückauflage 3 ist.

Gemäß einer alternativen Ausgestaltung ist keine Werkstückteil-Abtransporteinrichtung 48 vorgesehen. In diesem Fall kann der höhenverstellbare Auflagetisch 7 beispielsweise in eine Tiefposition gebracht werden, bei der ein auf der Auflagefläche 8 befindliches Werkstückteil 5 an eine Palette 35 übergeben wird, beispielsweise durch Aktivieren des Bandtransports des höhenverstellbaren Auflagetisches 7. Denkbar wäre auch, dass der in einer Tiefposition befindliche mittlere Auflagetisch 7 in eine schräge Position kippbar ist, so dass das Werkstückteil 5 von der gekippten Auflagefläche 8 beispielsweise auf das Werkstückteil-Endlosband 49, eine Palette 35 oder einen Gutteilbehälter abrutschen kann.

Für das Ausschleusen mittelgroßer Werkstückteile 5 ist es vorteilhaft, wenn die Werkstückteile 5 so ausgebildet sind, dass sie statisch stabil auf der Auflagefläche 8 des höhenverstellbaren Auflagetisches 7 liegen. Falls dies nicht der Fall ist, kann eine sichere Lagerung durch Festlegen an der Auflagefläche 8 mittels einer Fixiereinrichtung erfolgen, beispielsweise eine Ansaugeinrichtung mit mindestens einer mit Unterdruck beaufschlagbaren Ansaugöffnung. Typischer Weise, jedoch nicht zwingend, befindet sich der Schwerpunkt eines zur Ausschleusung durch den mittleren Auflagetisch 7 vorgesehenen mittelgroßen Werkstückteils 5 beim Freischneiden auf dessen Auflagefläche 8, so dass es umgehend ausgeschleust werden kann. Möglich wäre auch, das plattenförmige Werkstück 4 auf der Werkstückauflage 3 so zu bewegen, dass das mittelgroße Werkstückteil 5 nach Freischneiden in eine geeignete Position auf der Auflagefläche 8 gebracht wird. In den Figuren 5 und 7 sind beispielhaft mittelgroße Werkstückteile 5 auf der Bandauflage 50 des Werkstückteil-Endlosbands 49 gezeigt.

Aufgrund der Möglichkeit mittelgroße Werkstückteile 5 durch den höhenverstellbaren mittleren Auflagetisch 7 auszuschleusen, ist eine besonders zeit- und kosteneffiziente Teilefertigung möglich. Das Ausschneiden weiterer Werkstückteile kann auch dann fortgesetzt werden, wenn der mittlere Auflagetisch 7 aus seiner Hochposition abgesenkt ist. Durch die Auflageflächen 8 der beiden anderen Auflagetische 7 wird weiterhin eine geeignete Werkstückauflage 3 für das plattenförmige Werkstück 4 gebildet. Nach Übergabe des Werkstückteils 5 kann die Auflagefläche 8 des mittleren Auflagetisches 7 durch Hochstellen in Hochposition problemlos wieder in die Werkstückauflage 3 eingefügt werden. Durch das Entfernen der mittelgroßen Werkstückteile 5 vom Restgitter 6 unmittelbar nach Freischneiden, kann die eingangs geschilderte Kipp-Problematik nicht auftreten und die Prozeßsicherheit kann weiter verbessert werden.

Falls in der Laserschneidmaschine 1 große Werkstückteile 5 aus dem plattenförmigen Werkstück 4 ausgeschnitten werden, können diese manuell oder durch die Handhabungseinrichtung 30 von der Werkstückauflage 3 entnommen werden. Durch die vollflächige Bandauflage kann die Gefahr des Verkippens großer Werkstückteile 5 relativ zum Restgitter 6 erheblich vermindert werden. Ergänzend können große Werkstückteile 5 und das Restgitter 6 auf der Werkstückauflage 3 durch eine Fixiereinrichtung flächig festgelegt werden.

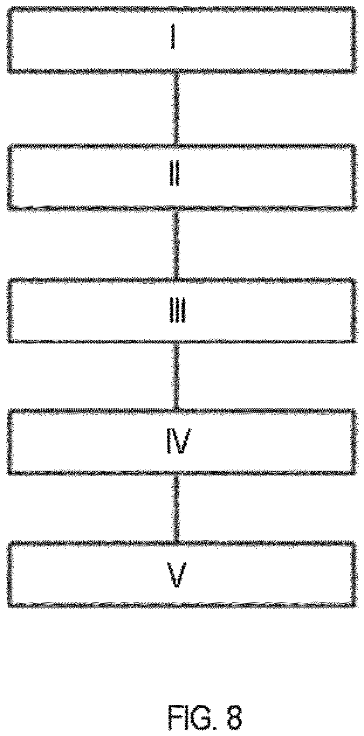

Wie in Figur 1 gezeigt, umfasst die Laserschneidmaschine 1 eine programmgesteuerte Steuer-/Kontrolleinrichtung 51, welche zur Steuerung/Kontrolle der verschiedenen Vorgänge beim Herausschneiden von Werkstückteilen 5 aus einem plattenförmigen Werkstück 4 dient. Das von der Laserschneidmaschine 1 ausgeführte Verfahren ist in allgemeiner Form im Ablaufdiagramm von Figur 8 veranschaulicht. Demnach umfasst das Verfahren folgende Schritte:
I) Bereitstellen des plattenförmigen Werkstücks (4) auf der aus mehreren Auflageflächen (8) zusammengesetzten Werkstückauflage (3),
II) Ausschneiden mindestens eines Werkstückteils (5) aus dem plattenförmigen Werkstück (4), wobei das Restgitter (6) verbleibt,
III) Entfernen des ausgeschnittenen Werkstückteils (5) vom Restgitter (6) durch Absenken mindestens einer höhenverstellbaren Auflagefläche (8) von einer Hochposition, in der die Auflagefläche Teil der Werkstückauflage ist, in mindestens eine Tiefposition,
IV) Entfernen des ausgeschnittenen Werkstückteils (5) von der in Tiefposition befindlichen höhenverstellbaren Auflagefläche (8),
V) Hochstellen der höhenverstellbaren Auflagefläche (8) von der Tiefposition in die Hochposition.

Die Erfindung zeigt ein neuartiges Verfahren zum Ausschneiden von Werkstückteilen aus einem plattenförmigen Werkstück mittels eines Schneidstrahls. Wie der vorstehenden Erfindungsbeschreibung entnommen werden kann, können wesentliche Vorteile gegenüber herkömmlichen Verfahren erreicht werden. Durch das zügige Ausschleusen von kleinen Werkstückteilen/Abfallteilen und mittelgroßen Werkstückteilen durch Schneidspalt bzw. mindestens eine höhenverstellbare Auflagefläche werden die Prozeßsicherheit und die Effizienz bei der Teilefertigung erheblich verbessert, wobei während des Ausschleusens der Laserschneidprozeß fortgesetzt werden. Insgesamt ist hierdurch eine besonders zeit- und kosteneffiziente Herstellung von Werkstückteilen ermöglicht.

### Bezugszeichenliste

- 1: Laserschneidmaschine
- 2: Grundkörper
- 3: Werkstückauflage
- 4: Werkstück
- 5: Werkstückteil
- 6: Restgitter
- 7: Auflagetisch
- 8: Auflagefläche
- 9: Schneidspalt
- 10: Auflagetisch-Endlosband
- 11: Umlenkwalze
- 12: Stützwalze
- 13: Fixiereinrichtung
- 14: Klemmpratze
- 15: Werkstückkante
- 16: Querträger
- 17: Schneidkopf
- 18: Verfahrmechanismus
- 19-1: erster Führungsschlitten
- 19-2: zweiter Führungsschlitten
- 19-3: dritter Führungsschlitten
- 20-1: erste Führungsschiene
- 20-2: zweite Führungsschiene
- 20-3: dritte Führungsschiene
- 21: Verfahrbereich
- 24: Bearbeitungszone
- 25: Strebe
- 26: Laserstrahlquelle
- 27: Arbeitsgasquelle
- 28: Lagerzone
- 29: Lagertisch
- 30: Handhabungseinrichtung
- 31: Greiforgan
- 32: Endabschnitt
- 33: Kontaktfläche
- 34: Gutteilablage
- 35: Palette
- 36: Längsträger
- 37: Längsträgerführungsschiene
- 38: Greiforganträger
- 39: Abfallteil-Abtransporteinrichtung
- 40: Abfallteil-Endlosband
- 41: Abfallbehälter
- 42: Ablenkelement
- 43: Schwenkachse
- 44: Fallkanal
- 45: Ablenkfläche
- 46: Gutteilbehälter
- 47: Bandauflage
- 48: Werkstückteil-Abtransporteinrichtung
- 49: Werkstückteil-Endlosband
- 50: Bandauflage
- 51: Steuer-/Kontrolleinrichtung

## Patentansprüche

1. Verfahren zum Ausschneiden von Werkstückteilen (5) aus einem plattenförmigen Werkstück (4) mittels eines innerhalb eines Schneidspalts (9) geführten Schneidstrahls, welches die folgenden Schritte umfasst:
- Bereitstellen des plattenförmigen Werkstücks (4) auf einer aus mehreren Auflageflächen (8) zusammengesetzten Werkstückauflage (3),
- Ausschneiden mindestens eines Werkstückteils (5) aus dem plattenförmigen Werkstück (4), wobei ein Restgitter (6) verbleibt,
- Entfernen des ausgeschnittenen Werkstückteils (5) vom Restgitter (6) durch Absenken mindestens einer höhenverstellbaren Auflagefläche (8) von einer Hochposition, in der die Auflagefläche Teil der Werkstückauflage ist, in mindestens eine Tiefposition,
- Entfernen des ausgeschnittenen Werkstückteils (5) von der in Tiefposition befindlichen höhenverstellbaren Auflagefläche (8),
- Hochstellen der höhenverstellbaren Auflagefläche (8) von der Tiefposition in die Hochposition.

2. Verfahren nach Anspruch 1, bei welchem nur solche Werkstückteile (5) mittels der höhenverstellbaren Auflagefläche (8) vom Restgitter (6) entfernt werden, die in Richtung einer Spaltbreite des Schneidspalts (9) eine Abmessung aufweisen, die gleich oder größer ist als die Spaltbreite.

3. Verfahren nach Anspruch 1 oder 2, bei welchem eine Verstellung der höhenverstellbaren Auflagefläche zwischen der Hochposition und der mindestens einen Tiefposition erfolgt, indem eine Höhe eines die Auflagefläche (8) bildenden Auflagetisches (7) verstellt wird.

4. Verfahren nach einem der Ansprüche 1 bis 3, bei welchem das Werkstückteil (5) von der in Tiefposition befindlichen höhenverstellbaren Auflagefläche (8) an eine Werkstückteil-Abtransporteinrichtung (48) zum Abtransportieren des Werkstückteils (5) übergeben und abtransportiert wird

5. Verfahren nach Anspruch 4, bei welchem das Werkstückteil (5) durch die Werkstückteil-Abtransporteinrichtung (48) in eine Position transportiert wird, bei der sich das Werkstückteil (5) außerhalb eines Raums befindet, der sich in Schwerkraftrichtung unterhalb der Werkstückauflage (3) befindet.

6. Verfahren nach einem der Ansprüche 1 bis 5, bei welchem, während sich die mindestens eine höhenverstellbare Auflagefläche (8) unterhalb der Hochposition befindet, mindestens ein weiteres Werkstückteil (5) wenigstens teilweise ausgeschnitten wird.

7. Verfahren nach einem der Ansprüche 1 bis 6, bei welchem mindestens ein Werkstückteil (5) vom plattenförmigen Werkstück (4) so ausgeschnitten wird, dass es durch den Schneidspalt (9) fällt.

8. Verfahren nach einem der Ansprüche 1 bis 7, bei welchem mindestens ein Abfallteil vom plattenförmigen Werkstück (4) so ausgeschnitten wird, dass es durch den Schneidspalt (9) fällt.

9. Verfahren nach Anspruch 7 und 8, bei welchem das durch den Schneidspalt (9) fallende Werkstückteil (5) und/oder Abfallteil aus seiner Fallrichtung abgelenkt wird.

10. Verfahren nach Anspruch 9, bei welchem verschiedene Werkstückteile (5) und/oder verschiedene Abfallteile, die durch den Schneidspalt (9) fallen, in voneinander verschiedene Richtungen abgelenkt werden.

11. Verfahren nach einem der Ansprüche 8 bis 10, bei welchem das durch den Schneidspalt (9) fallende Abfallteil auf eine Abfallteil-Abtransporteinrichtung (39) zum Abtransportieren des Abfallteils gelangt und abtransportiert wird.

12. Verfahren nach einem der Ansprüche 1 bis 11, bei welchem mindestens ein Werkstückteil (5) durch Aufnehmen des Werkstückteils (5) mittels einer Handhabungseinrichtung (30) vom Restgitter (6) entfernt wird.

13. Verfahren nach Anspruch 12, bei welchem nur solche Werkstückteile(5) mittes der Handhabungseinrichtung (30) vom Restgitter (6) entfernt werden, die in Richtung einer Spaltbreite des Schneidspalts (9) eine Abmessung aufweisen, die gleich oder größer ist als die Summe einer Abmessung der mindestens einen höhenverstellbaren Auflagefläche (8) und der Spaltbreite des Schneidspalts (9).

14. Verfahren nach einem der Ansprüche 1 bis 13, bei welchem das plattenförmige Werkstück (4) von den die Werkstückauflage (3) bildenden Auflageflächen (8) vollflächig unterstützt wird.

15. Verfahren nach einem der Ansprüche 1 bis 14, bei welchem mindestens ein ausgeschnittenes Werkstückteil (5) und/oder das Restgitter (6) auf mindestens einer Auflagefläche (8) fixiert wird.
